# EUROPEAN PATENT SPECIFICATION

(11) **EP 2 219 467 B1**
(45) Date of publication and mention of the grant of the patent: **20.08.2014**
(21) Application number: 08855620.4
(22) Date of filing: 25.11.2008
(51) Int. Cl.: A23G 4/06

(54) **MULTI-REGION CHEWING GUM WITH ACTIVES**
MEHRZONEN-KAUGUMMI MIT WIRKSTOFFEN
CHEWING-GUM À PLUSIEURS ZONES AVEC DES INGRÉDIENTS ACTIFS

(30) Priority: 29.11.2007 US 991015 P
(43) Date of publication of application: 25.08.2010
(73) Proprietor: Intercontinental Great Brands LLC, East Hanover, NJ 07936 (US)
(72) Inventor: ROBINSON, Mary, K., Sparta NJ 07871 (US); SCHMITZ, Kristen, Jersey City, NJ 07302 (US)
(74) Representative: Wilson Gunn
(86) International application number: PCT/US2008/084653
(87) International publication number: WO 2009/070570

(56) References cited:
- WO-A1-98/23165
- US-A- 6 024 988
- US-A- 6 165 516
- US-A1- 2004 037 924
- US-B1- 6 444 241
- US-B1- 6 949 264

## Description

### FIELD

In some embodiments, compositions for a multi-region chewing gum with actives are provided. More particularly, compositions for a multi-region chewing gum include at least one active agent in a solid candy composition. The individual gum pieces which include these compositions comprise multiple regions such as an interior soft candy region with at least one active agent surrounded by a chewing gum region which can optionally be coated with an external coating region.

### BACKGROUND

Chewing gums available today generally contain a water-insoluble gum base, sweeteners, natural or artificial flavors, and a variety of additional components tailored to provide specific release characteristics. For example, some chewing gums may include plasticizers or softeners to improve consistency during chew. Other chewing gums, for instance, may include physiological cooling agents to provide a cooling sensation upon consumption by the user.

There is a need, however, for new chewing gum compositions, which provide the desired advantage of providing a dosage of an active agent, such as caffeine, to the user, while still maintaining a desirable taste and texture. The benefits of caffeine are numerous, and range from combating fatigue, to relieving pain from headaches, to providing a boost of energy in situations where such energy may be needed. Further, caffeine may have a positive effect on the user's increased focus and concentration. Other active agents, such as medicaments and supplements, are also contemplated within the invention and provide numerous benefits as well.

Active agents, such as caffeine, may be added to a chewing gum composition directly, however, such stimulants are not released very readily. The use of caffeine in gum compositions has been disclosed in various patents, including U.S. Patent Nos. 6,165,516 and 6,773,716. These patents relate generally to a method of controlling the release of active agents, specifically caffeine, in chewing gum, given the difficulty in releasing the active agent from chewing gum compositions, such as by including caffeine in a gum coating or by physically modifying caffeine to control its release. U.S. Patent No. 6,949,264, for example, discloses the use of caffeine in a liquid center of a chewing gum. However, individuals may not desire the texture and taste associated with a liquid center-filled gum product, or the active agent may produce an undesirable flavor perception as it is released in large amounts in the liquid center.

There is presently a need for a gum composition including an active agent, which allows the user to quickly gain the effects of the active agent while still enjoying the taste and texture of the gum composition. This invention satisfies that need as well as other advantages previously presented.

### SUMMARY

The invention relates to a chewing gum composition and methods according to claims 1 to 16.

In some embodiments, there is provided a chewing gum composition which includes a first region, which is a solid candy composition comprising an active agent, and a second region which comprises an elastomer.

In some embodiments, the first region is a chewy solid, such as a taffy, nougat, frappe, fudge, or the like.

In some embodiments, the chewing gum composition is in the form of a pellet, stick, ball, shred, rope, or tape, and may be in the shape of a circle, square, rectangle, or trapezoid.

In other embodiments of the invention, there is provided a chewing gum composition which includes a first region including a solid center-fill composition including an active and a second region, which includes an elastomer adjacent to the first region.

The second region may completely surround the first region. Further, the first and second regions may be homogeneously distributed throughout the chewing gum composition. The center-fill composition may include a composition of at least one active with one or more materials selected from the group consisting of sweeteners, flavoring agents, sugar, high fructose corn syrup, aspartame, acesulfame potassium, gelatin, natural oils and fat. In addition, the active may include caffeine. The first region includes a chewy solid, which may be any of a taffy, a nougat, a frappe, a fudge, a boiled candy, an isomalt-based candy, a particulate, a powder, a suspension, two or more compositions selected from the group consisting of a chewy solid, a boiled candy, an isomalt-based candy, and a particulate.

In some embodiments, the first region may include a solid suspension, which may include particulates dispersed within a chewy solid. The particulates may be encapsulated if desired, and may include flavored particles, and/or a sweetening material. The first region may further include a cooling agent. The first region may be partially filled or it may be completely filled. The chewing gum composition may be in various forms, including in the form of a pellet, stick, ball, slab, shred, rope, tape, square, rectangle, or trapezoid. The composition may further include a coating.

In still other embodiments of the invention, there is provided a method of manufacturing a solid center-filled chewing gum composition, including steps of providing a solid candy composition which includes an active and a gum base, and co-extruding the candy composition and the gum base so that the solid candy composition is located within the gum base.

In further embodiments of the invention, there is provided a method of manufacturing a solid center-filled chewing gum composition, including steps of mixing a candy composition with an active at a high temperature to form a candy melt, cooling the composition, providing an elastomer, and co-extruding the candy composition and elastomer so that the candy composition is located within the elastomer. The method may further include the step of cutting the extruded solid candy center-filled chewing gum composition into individual pieces

In other embodiments of the invention, there is provided a method of delivering a dosage of an active to an individual, including steps of providing a chewing gum including a solid center-fill region which includes at least one active, chewing the gum, and absorbing the active through both the oral mucosa and the gastrointestinal system and into the systemic system of the individual. In some embodiments, the active may include caffeine. The individual may chew the chewing gum for any desired length of time, and may chew the chewing gum for at least 2 minutes

In still other embodiments of the invention, there is provided a chewing gum composition which includes a first region comprising a solid center-fill composition including a sweetener and/or bulking agent; at least one active; and flavor, and a second region comprising an elastomer.

In another embodiment, there is provided an edible product kit, which includes a plurality of separate edible pieces, where the edible pieces are packaged so that at least a first piece and a second piece are contacted substantially simultaneously in the oral cavity, wherein the first piece includes a solid candy composition including an active and the second piece includes an elastomer.

In other embodiments of the invention there is provided a method of manufacturing a solid candy center-filled chewing gum composition, which includes the steps of providing a solid candy composition including an active; providing an elastomer; and surrounding the solid candy composition with the elastomer so that said solid candy composition is located within said elastomer. In some embodiments, the active may include caffeine..

In other embodiments of the invention there is provided a method of manufacturing a caffeinated solid candy center-filled chewing gum composition, which includes the steps of providing a solid candy composition including at least one active; providing an elastomer; co-extruding the solid candy composition and the elastomer, so that the elastomer surrounds the solid candy composition; and cutting the extruded composition into individual pieces. In some embodiments, the active may include caffeine.

In still other embodiments of the invention there is provided a method of increasing the level of focus and concentration in an individual including the steps of: providing a chewing gum including a caffeinated solid center-filled region; chewing the chewing gum; absorbing the caffeine through both the oral mucosa and the gastrointestinal system and into the systemic system of the individual. In some embodiments, the individual may chew the chewing gum for at least two minutes. In other embodiments, the solid center-filled composition may be homogeneously dispersed throughout the elastomer

The chewing gum compositions may further include a taste-masking ingredient. A further embodiment of the invention includes a chewing gum composition with taste masking ingredients including a first region comprising a solid candy composition, which includes an active and a fat; and a second region comprising an elastomer. In some embodiments, the active may include caffeine.. The fat may be present in any desired amount, and in one embodiment is present in an amount of from 1-15% by weight of the first region. In other embodiments the fat is present in an amount of from 0.5-10% of the chewing gum composition.

A further embodiment of the invention includes a method of masking off-tastes in chewing gum including the steps of providing a solid candy composition including an active and fat; providing an elastomer; and surrounding the solid candy composition with the elastomer so that the solid candy composition is located within the elastomer.

### DETAILED DESCRIPTION

In some embodiments chewing gum compositions provide the advantage of delivering a dosage of an active such as caffeine to the user of the chewing gum, while still maintaining desirable taste and texture.

As used herein the transitional term "comprising," (also "comprises," etc.) which is synonymous with "including," ""containing," or ""characterized by," is inclusive or openended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the term "center-fill" refers to the innermost region of the compositions. The term "center-fill" does not imply symmetry of a gum piece, only that the "center-fill" is within another region of the gum piece. In some embodiments, more than one center-fill maybe present.

As used herein, the term "solid candy composition" and "solid center-fill composition" refer to a candy composition that is not freely flowable, and is capable of maintaining its shape at room temperature until an outside force is acted upon it. "Solid" does not refer to a hard material or one that does not include air gaps or other materials in the composition.

Embodiments described herein provide a multi-region chewing gum composition that may include a solid candy composition comprising caffeine and a gum base adjacent to the solid candy composition. In some embodiments, the candy composition may include layered regions of different or of the same materials. For example, the composition may include one or more regions of chewing gum composition, one or more regions of solid candy composition, or combinations thereof. In one embodiment, the composition may be layered in a "sandwich" configuration or in a side-by-side configuration, either horizontally, vertically, or diagonally, with each region having an exterior surface that is at least partially visible by the user.

In one embodiment, the composition may include three or more layers arranged in a side-by-side configuration. In one particular embodiment, the composition may include a first exterior layer of solid candy composition, an interior layer of chewing gum composition, and a second exterior layer of solid candy composition. In another embodiment, the composition may include a first exterior layer of chewing gum composition, an interior layer of solid candy composition, and a second exterior layer of chewing gum composition. Any desired configuration may be incorporated if desired, and may include more than three layers or less than three layers. Further, each region may be visible from the exterior, and may include a different color or texture so that the user may more easily distinguish the various layers. The various layers may be formed via any desired means. For example, the layers may be co-extruded together in the side-by-side formation, or they may be configured after the regions have been formed.

### Chewing Gum Compositions

The chewing gum composition may include a gum base. The gum base may include any component known in the chewing gum art. Such components may be water soluble, water-insoluble or a combination thereof. For example, the gum base may include elastomers, bulking agents, waxes, elastomer solvents, emulsifiers, plasticizers, fillers and mixtures thereof.

The elastomers (rubbers) employed in the gum base may vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, polyvinyl acetate and the like, and mixtures thereof.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from about 10% to about 60% by weight, desirably from about 35% to about 40% by weight.

In some embodiments, the gum base may include wax or fat.. Fats or waxes can soften the polymeric elastomer mixture and improve the elasticity of the gum base. When present, the waxes and/or fats employed may have a melting point below about 60°C, and the melting point may fall between about 45°C and about 55°C: In some embodiments, a low melting wax may be a paraffin wax. The fat and/or wax may be present in the gum base in an amount from about 6% to about 10%, and may be from about 7% to about 9.5%, by weight of the gum base. The gum base may also be wax-free.

In addition to the low melting point waxes, waxes having a higher melting point may be used in the gum base in amounts up to about 5%, by weight of the gum base. Such high melting waxes include beeswax, vegetable wax, candelilla wax, camuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritot ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and may be from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Glycerin including anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof These fillers or adjuvants may be used in the gum base compositions in various amounts. The amount of filler, when used, may be present in an amount from about 15% to about 40%, and may be from about 20% to about 30%, by weight of the gum base.

A variety of traditional ingredients may be optionally included in the gum base in effective amounts such as flavor agents and coloring agents, antioxidants, preservatives, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, vitamin E and mixtures thereof, may also be included. Other conventional chewing gum additives known to one having ordinary skill in the chewing gum art may also be used in the gum base.

The chewing gum compositions may include amounts of conventional additives selected from the group consisting of sweetening agents, plasticizers, softeners, emulsifiers, waxes, fillers, bulking agents (carriers, extenders, bulk sweeteners), mineral adjuvants, flavor agents and coloring agents, antioxidants, acidulants, thickeners, medicaments, oral care actives, such as remineralization agents, antimicrobials and tooth whitening agents, as described in assignee's co-pending U.S. Patent Application No. 10/901,511, filed on July 29, 2004 and entitled "Tooth Whitening Compositions and Delivery Systems Therefor," which is incorporated herein by reference in its entirety, and the like, and mixtures thereof. Some of these additives may serve more than one purpose. For example, in sugarless gum compositions, a sweetener, such as maltitol or other sugar alcohol, may also function as a bulking agent.

Bulk sweeteners include sugars, sugarless bulk sweeteners, or the like, or mixtures thereof. Bulk sweeteners generally are present in amounts of about 5% to about 99% by weight of the chewing gum composition.

Suitable sugar sweeteners generally include mono-saccharides, di-saccharides and poly-saccharides such as but not limited to, sucrose (sugar), dextrose, maltose, dextrin, xylose, ribose, glucose, lactose, mannose, galactose, fructose (levulose), invert sugar, fructo oligo saccharide syrups, partially hydrolyzed starch, sucromalt, com syrup solids, isomaltulose and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysate, and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of com syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Polyols, Inc. of New Castle, Delaware, are also useful.

In some embodiments, high-intensity sweeteners also may be included as sweetening agents in the compositions. Without being limited to particular sweeteners, representative categories and examples include:
(a) water-soluble sweetening agents such as dihydrochalcones, monellin, steviosides and stevia derived compounds such as but not limited to rebaudiocide A, iso-mogroside V and the like, lo han quo and lo han quo derived compounds, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, which disclosure is incorporated herein by reference, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose or Splenda^{™}; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-1,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as miraculin, extracts and derivatives of extracts of *Synseplum dulcificum,* mabinlin, curculin, monellin, brazzein, pentadin, extracts and derivatives of extracts of *Pentadiplandra brazzeana,* thaumatin, thaumaoccous danielli (Thaumatin I and II) and talin;
(f) the sweetener monatin (2-hydroxy-2-(indol-3-ylmethyl)-4-aminoglutaric acid) and its derivatives or isomers; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K or acesulfame-K).

In some embodiments, the sweetener may be a polyol. Polyols can include, but are not limited to glycerol, sorbitol, maltitol, maltitol Syrup, mannitol, isomalt, erythritol, xylitol, hydrogenated starch hydrolysates, polyglycitol syrups, polyglycitol powders, lactitol, and combinations thereof.

The sweetener, may be part of a delivery system and may be used in amounts necessary to impart the sweetness. In general, an effective amount of intense sweetener may be utilized to provide the level of sweetness desired, and this amount may vary with the sweetener selected. The intense sweetener may be present in amounts from about 0.001% to about 3%, by weight of the chewing gum composition, depending upon the sweetener or combination of sweeteners used. The exact range of amounts for each type of sweetener may be selected by those skilled in the art.

Flavors (flavorings or flavor agents), which may be used in the chewing gum compositions, include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This publication is incorporated herein by reference.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavor agent may be-employed in either liquid form and/or dried form. When employed in the latter form, suitable drying means such as spray drying the oil may be used. Alternatively, the flavor agent may be absorbed onto water soluble materials, such as cellulose, starch, sugar, maltodextrin, gum arabic and so forth or may be encapsulated. The actual techniques for preparing such dried forms are well-known.

In some embodiments, the flavor agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

In chewing gum compositions, flavor agents generally may be present in amounts from about 0.02% to about 5%, and more specifically from about 0.1% to about 4%, and even more specifically, from about 0.8% to about 3%, by weight of the composition.

In some embodiments, the flavor agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

Compounds that provide tartness may include acidulants, such as acetic acid, adipic acid, ascorbic acid, butyric acid, citric acid, formic acid, fumaric acid, glyconic acid, lactic acid, phosphoric acid, malic acid, oxalic acid, succinic acid, tartaric acid and mixtures thereof.

Compounds that provide umami or savory flavor may include monosodium glutamate (MSG), glutamic acid, glutamates, aspartate, free amino acids, IMP (disodium 5'-inosine monophosphate) and GMP (disodium 5'-guanosine monophosphate), compounds that stimulate T1R1 and T1R3 receptors, mushroom flavor, fermented fish flavor, and muscle flavors, such as beef, chicken, pork, ostrich, venison and buffalo.

Substances that impart kokumi may include a mixture selected from: (1) gelatin and tropomyosin and/or tropomyosin peptides; (2) gelatin and paramyosin; and (3) troponin and tropomyosin and/or tropomyosin peptides, as disclosed in U.S. Patent No. 5,679,397 to Kuroda et al., referred to above.

Compounds that provide saltiness may include conventional salts, such as sodium chloride, calcium chloride, potassium chloride, 1-lysine and combinations thereof.

Coloring agents may be used in amounts effective to produce the desired color. The coloring agents may include pigments which may be incorporated in amounts up to about 6%, by weight of the composition. For example, titanium dioxide may be incorporated in amounts up to about 2%, and may be less than about 1%, by weight of the composition. The colorants may also include natural food colors and dyes suitable for food, drug and cosmetic applications. These colorants are known as F.D.& C. dyes and lakes. The materials acceptable for the foregoing uses may be water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

In some embodiments, the chewing gum compositions may include sensate compounds. Sensate compounds can include cooling agents, warming agents, tingling agents, effervescent agents, and combinations thereof.

A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), ethyl ester of N-[[5-methyl-2-(1-methylethyl)cyclohexyl]carbonyl]glycine (WS5), as well as the substantially pure ethyl ester of N-[[5-methyl-2-(1-methylethyl)cyclohexyl]carbonyl]glycine as disclosed in U.S. Patent No. 7,189760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide,1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyi-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 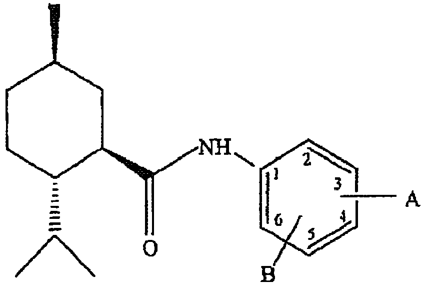 wherein B is selected from H, CH3, C2H5, OCH3, 0C2H5; and OH; and wherein A is a moiety of the formula-CO-D, wherein D is selected from the following moieties: (i)-NR1R2, wherein R' and R2 are independently selected from H and C1-C8 straight or branched-chain aliphatic, alkoxyalkyl, hydroxyalkyl, araliphatic and cycloalkyl groups, or R1 and R2 together with the nitrogen atom to which they are attached form part of an optionally-substituted, five-or six-membered heterocyclic ring; (ii)-NIICH2COOCH2CH3,-NHCH2CONH2,-NHCH2CH2OCH3,-NHCH2CH2OH,-NHCH2CH(OH)CH2OH and (iii) a moiety selected from the group consisting of: 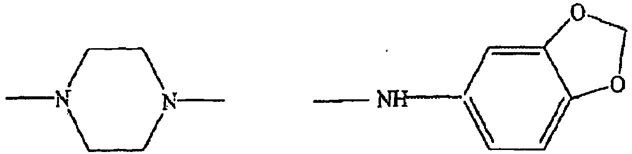 as disclosed in PCT Patent Application WO2006/125334 to Bell et al which is incorporated in its entirety herein by reference, among others. Other compounds include the alpha-keto enamines disclosed in U.S. Patent Number 6,592,884 to Hofmann et al which is incorporated in its entirety herein by reference. These and other suitable cooling agents are further described in the following U.S. patents, all of which are incorporated in their entirety by reference hereto: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Patent Applications, all of which are incorporated in their entirety by reference hereto: U.S. 2005/0222256; 2005/0265930.

Some embodiments may include warming agents, which may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful wanning agents include those having at least one allyl vinyl component, which may bind to oral receptors. Examples of suitable warming agents include, but are not limited to: vanillyl alcohol n-butylether (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerine; chloroform; eugenol; cinnamon oil; cinnamic aldehyde; phosphate derivatives thereof; and combinations thereof.

Tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates include those disclosed in U.S. Patent Nos. 6,780,443, 6,159,509, 5,545,424, and 5,407,665, each of which is incorporated by reference herein in its entirety.

Oral care agents that may be used include those actives known to the skilled artisan, such as, but not limited to, surfactants, breath freshening agents, anti-microbial agents, Antibacterial agents, anti-calculus agents, anti-plaque agents, oral malodor control agents, fluoride compounds, quaternary ammonium compounds, remineralization agents and combinations thereof. The gum composition may further include stimulants, active agents, or medicaments.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

Other conventional gum additives known to one having ordinary skill in the chewing gum art also may be used in the chewing gum compositions.

Some embodiments extend to methods of preparing a chewing gum product. The products may be prepared using standard techniques and equipment known to those skilled in the art, which processes generally involve melting the gum base, incorporating the desired ingredients while mixing and forming the batch into individual chewing gum pieces. The apparatus useful in accordance with the embodiments described herein includes mixing and heating apparatus well known in the chewing gum manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al, each of which is incorporated herein by reference in its entirety.

Individual chewing gum pieces may be formed using standard techniques known in the chewing gum art. For instance, chewing gum pieces may be prepared in the form of a slab, pellet, stick, center-fill gum, rope, tape, shred, ball, square, rectangle, trapezoid, deposited, compressed chewing gum or any other suitable format. The center fill region and chewing gum regions may be brought together in any suitable method. For example, the two regions may be mixed together into a single formulation. Alternatively, the chewing gum region and candy regions maybe formed on a side-by-side basis, or with one region falling inside the other region. In one embodiment, the chewing gum region surrounds the solid candy region, but other formations are contemplated by this invention. Another embodiment includes the solid candy composition and the chewing gum in separate edible pieces, packaged together, where both pieces are to be chewed by the user at the same time.

The chewing gum composition may be in a compressed gum format, such as, for example, a pressed tablet gum. Such embodiments may include a particulate chewing gum base, which may include a compressible gum base composition and a tableting powder. Examples of compressed chewing gums can be found in assignee's co-pending U.S. Provisional Application No. 60/734,680, filed on November 8, 2005, and entitled "Compressible Gum System."

In some embodiments, the chewing gum composition may have a third region. The third region may form an exterior surface on the chewing gum composition. When the third region forms an exterior surface, the third region may be referred to as a coating or coating region. Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, erythritol and other crystallizable polyols; sucrose may also be used. Furthermore the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition includes a coating, it is possible that one or more actives can be dispersed throughout the coating. This configuration can be useful if one or more actives is incompatible in a single phase composition with another of the actives. Flavors or sensates may also be added to the coating to further yield unique product characteristics.

Other materials may be added to the coating to achieve desired properties. These materials may include without limitations, cellulosics such as carboxymethyl cellulose, gelatin, xanthan gum and gum arabic.

The coating can be a particulate layer such as powdered sugar, particulate polyol, etc. The particulate layer can be applied by any method known in the art including dusting where electrostatic forces adhere the particulate layer to the chewing gum or solid candy region(s) or sanding where a binder such as water helps to adhere the particulate layer.

The coating composition may be applied by any method known in the art including the method described above. The coating composition may be present in an amount from about 2% to about 60%, more specifically from about 25% to about 45% by weight of the total chewing gum piece.

### Solid Candy Composition

In some embodiments, the multi-region chewing gum compositions include a candy composition region, which is of a solid form. The candy composition region may be at least partially surrounded by an elastomeric region in any number of configurations such that the chewing gum composition is in a center filled form with the candy composition region in the center, a layered form with the candy composition region adjacent to or in between elastomeric regions, etc. The candy composition region may be, for example, a particulate, powder, aerated form, taffy, fudge, frappe, nougat, whip, or other solid. Some embodiments of the center-fill chewing gum composition also may include a third region which forms an outer coating or shell, which typically provides a crunchiness to the piece when initially chewed. This outer coating or shell may be a hard candy shell, a soft gum shell, a particulate layer, or any other coating desired. The outer coating or shell may at least partially surround the multi-region chewing gum composion. In some embodiments, the candy may either be on the inside or the outside of the product, or the candy may be interspersed throughout the gum region.

The candy region of some embodiments is a solid composition. The solid composition may include sweeteners, flavoring, sugar, oils, fats, milk, or other traditional candy manufacturing materials. In some embodiments, the solid composition includes caffeine, and may include other active ingredients including stimulants, medicaments, or supplements. Active ingredients generally refer to those ingredients that are included in a delivery system and/or chewing gum composition for the desired end benefit they provide to the user. In some embodiments, actives can include medicaments, nutrients, nutraceuticals, herbals, nutritional supplements, pharmaceuticals, drugs, and the like and combinations thereof as shown in Table A.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, anti-inflammatory substances, coronary dilators, cerebral dilators, peripheral vasodilators, psychotropics, stimulants, anti-hypertensive drugs, vasoconstrictors, migraine treatments, antibiotics, tranquilizers, anti-psychotics, anti-tumor drugs, anti-coagulants, anti-thrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use can include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin™, ibuprofen, aspirin, acetaminophen, and combinations thereof that may optionally include caffeine.

Other drug active ingredients for use in embodiments can include anti-diarrheals such as Immodium™ AD, anti-histamines, anti-tussives, decongestants, vitamins, and breath fresheners. Also contemplated for use herein are anxiolytics such as Xanax™; anti-psychotics such as Clozaril™ and Haldol™; non-steroidal anti-inflammatories (NSAID's) such as ibuprofen, naproxen sodium, Voltaren™ and Lodine™, anti-histamines such as Claritin™, Hismanal™, Relafen™, and Tavist™; anti-emetics such as Kytril™ and Cesamet™; bronchodilators such as Bentolin™, Proventil™; anti-depressants such as Prozac™, Zoloft™, and Paxil™; anti-migraines such as Imigra™, ACE-inhibitors such as Vasotec™, Capoten™ and Zestril™; anti-Alzheimer's agents, such as Nicergoline™; and CaH-antagonists such as Procardia™, Adalat™, and Calan™.

The popular H2-antagonists which are contemplated for use include cimetidine, ranitidine hydrochloride, famotidine, nizatidien, ebrotidine, mifentidine, roxatidine, pisatidine and aceroxatidine.

Active antacid ingredients can include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bi smuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, vitamin C, vitamin D, vitamin E, vitamin K, vitamin B₆, vitamin B₁₂, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements that can be used as active ingredients are set forth in U.S. Patent Application Publication Nos. 2003/0157213 A1, 2003/0206993 and 2003/0099741 A1 which are incorporated in their entirety herein by reference for all purposes.

Various herbals may also be used as active ingredients such as those with various medicinal or dietary supplement properties. Herbals are generally aromatic plants or plant parts and or extracts thereof that can be used medicinally or for flavoring. Suitable herbals can be used singly or in various mixtures. Active ingredients derived from herbal or botanical sources are sometimes referred to as phytochemicals. Classes of phytochemicals include, but are not limited to, polyphenols, flavonoids, flavanols, flavonols, flavanones, isoflavanones, anthocyanins, catechins, and flavonones. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Gingko Biloba, St. John's Wort, Evening Primrose Oil, Yohimbe Bark, Green Tea, EGCG (epigallocatechin gallate), Ma Huang, Maca, Cocoa polyphenols, Bilberry, Lutein, and combinations thereof.

Some embodiments include caffeine in the candy region. The caffeine may be present in any pharmaceutically effective amount, and has been shown to be effective in doses of from about 30 mg - 150 mg/serving. Currently an effective over-the-counter dosage is about 100 mg per serving. A traditional serving size of the product is about 1-5 pieces of chewing gum.

**TABLE A - Actives**

| **Components** | **Amount** |
|---|---|
| **I. Sensates** | |
| **A. Cooling agents** | |
| Menthol | 10-500 ppm |
| Xylitol | 5-95% |
| Erythritol | 5-95% |
| Menthane | 10-500 ppm |
| Menthone | 10-500 ppm |
| Menthyl acetate | 10-500 ppm |
| Menthyl salicylate | 10-500 ppm |
| WS-23 | 10-500 ppm |
| WS-3 | 10-500 ppm |
| Menthyl succinate | 10-500 ppm |
| 3,1-menthoxypropane 1,2-diol | 10-500 ppm |
| Glutarate esters | 10-500 ppm |
| | |

| **B. Warming agents** | |
|---|---|
| vanillyl alcohol n-butylether | 1-1500 ppm |
| vanillyl alcohol n-propylether | 1-1500 ppm |
| vanillyl alcohol isopropylether | 1-1500 ppm |
| vanillyl alcohol isobutylether | 1-1500 ppm |
| vanillyl alcohol n-aminoether | 1-1500 ppm |
| vanillyl alcohol isoamylether | 1-1500 ppm |
| vanillyl alcohol n-hexylether | 1-1500 ppm |
| vanillyl alcohol methylether | 1-1500 ppm |
| vanillyl alcohol ethylether | 1-1500 ppm |
| gingerol | 1-1500 ppm |
| shogaol | 1-1500 ppm |
| paradol | 1-1500 ppm |
| zingerone | 1-1500 ppm |
| capsaicin | 1-1500 ppm |
| dihydrocapsaicin | 1-1500 ppm |
| nordihydrocapsaicin | 1-1500 ppm |
| bomocapsaicin | 1-1500 ppm |
| homodihydrocapsaicin | 1-1500 ppm |
| ethanol | 1-1500 ppm |
| isopropyl alcohol | 1-1500 ppm |
| iso-amylalcohol | 1-1500 ppm |
| benzyl alcohol | 1-1500 ppm |
| glycerine | 1-1500 ppm |
| chloroform | 1-1500 ppm |
| eugenol | 1-1500 ppm |
| cinnamon oil | 1-1500 ppm |
| cinnamic aldehyde | 1-1500 ppm |
| | |

| **C. Tingling agents** | |
|---|---|
| Jambu Oleoresin or para cress | 5-500 ppm |
| Japanese pepper extract | 5-500 ppm |
| black pepper extract | 5-500 ppm |
| Echinacea extract | 5-500 ppm |
| Northern Prickly Ash extract | 5-500 ppm |
| red pepper oleoresin | 5-500 ppm |
| effervescing agents | 5-500 ppm |
| | |

| **II**. **Flavors** | |
|---|---|
| spearmint oil | 0.01 - 10.0 % |
| cinnamon oil | 0.01 - 10.0 % |
| oil of wintergreen | 0.01 - 10.0 % |
| peppermint oil | 0.01 - 10.0 % |
| clove oil | 0.01 - 10.0 % |
| bay oil | 0.01 - 10.0 % |
| anise oil | 0.01 - 10.0 % |
| eucalyptus oil | 0.01 - 10.0 % |
| thyme oil | 0.01 - 10.0 % |
| cedar leaf oil | 0.01 - 10.0 % |
| oil of nutmeg | 0.01 - 10.0 % |
| allspice | 0.01 - 10.0 % |
| oil of sage | 0.01 - 10.0 % |
| mace | 0.01 - 10.0 % |
| oil of bitter almonds | 0.01 - 10.0 % |
| cassia oil | 0.01 - 10.0 % |
| vanilla | 0.01 - 10.0 % |
| lemon | 0.01 - 10.0 % |
| orange | 0.01 - 10.0 % |
| lime | 0.01 - 10.0 % |
| grapefruit | 0.01 - 10.0 % |
| apple | 0.01 - 10.0 % |
| pear | 0.01 - 10.0 % |
| peach | 0.01 - 10.0 % |
| grape | 0.01 - 10.0 % |
| strawberry | 0.01 - 10.0 % |
| raspberry | 0.01 - 10.0 % |
| cherry | 0.01 - 10.0 % |
| plum | 0.01 - 10.0 % |
| pineapple | 0.01 - 10.0 % |
| apricot | 0.01 - 10.0 % |
| chocolate | 0.01 - 10.0 % |
| cola | 0.01 - 10.0 % |
| maple | 0.01 - 10.0 % |
| dulce de leche | 0.01 - 10.0 % |
| raisin | 0.01 - 10.0 % |
| caramel | 0.01 - 10.0 % |
| cinnamyl acetate | 0.01 - 10.0 % |
| cinnamaldehyde | 0.01 - 10.0 % |
| citral diethylacetal | 0.01 - 10.0 % |
| dihydrocarvyl acetate | 0.01 - 10.0 % |
| eugenyl formate | 0.01 - 10.0 % |
| p-methylamisol | 0.01 - 10.0 % |
| acetaldehyde | 0.01 - 10.0 % |
| benzaldehyde | 0.01 - 10.0 % |
| anisic aldehyde | 0.01 - 10.0 % |
| cinnamic aldehyde | 0.01 - 10.0% |
| citral | 0.01 - 10.0% |
| neral | 0.01 - 10.0% |
| decanal | 0.01 - 10.0% |
| ethyl vanillin | 0.01 - 10.0% |
| heliotrope | 0.01 - 10.0% |
| vanillin | 0.01 - 10.0% |
| alpha-amyl cinnamaldehyde | 0.01 - 10.0% |
| butyraldehyde | 0.01 - 10.0% |
| valeraldehyde | 0.01 - 10.0% |
| citronellal | 0.01 - 10.0% |
| decanal | 0.01 - 10.0% |
| aldehyde C-8 | 0.01 - 10.0% |
| aldehyde C-9 | 0.01 - 10.0% |
| aldehyde C-12 | 0.01 - 10.0% |
| 2-ethyl butyraldehyde | 0.01 - 10.0% |
| hexenal | 0.01 - 10.0% |
| tolyl aldehyde | 0.01 - 10.0% |
| veratraldehyde | 0.01 - 10.0% |
| 2,6-dimethyl-5-heptenal | 0.01 - 10.0% |
| 2,6-dimethyloctanal | 0.01 - 10.0% |
| 2-dodecenal | 0.01 - 10.0% |
| strawberry shortcake | 0.01 - 10.0% |
| pomegranite | 0.01 - 10.0% |
| beef | 0.01 - 10.0% |
| chicken | 0.01 - 10.0% |
| cheese | 0.01 - 10.0% |
| onion | 0.01 - 10.0% |
| | |

| **III. Tastes** | |
|---|---|
| **A. Sweeteners** | |
| sucrose | 5-100% |
| dextrose | 5-100% |
| maltase | 5-100% |
| dextrin | 5-100% |
| xylose | 5-100% |
| ribose | 5-100% |
| glucose | 5-100% |
| mannose | 5-100% |
| galactose | 5-100% |
| fructose | 5-100% |
| invert sugar | 5-100% |
| fructo oligo saccharide syrups | 5-100% |
| partially hydrolyzed starch | 5-100% |
| corn syrup solids | 5-100% |
| sorbitol | 5-100% |
| xylitol | 5-100% |
| mannitol | 5-100% |
| galactitol | 5-100% |
| maltitol | 5-100% |
| Isomalt | 5-100% |
| lactitol | 5-100% |
| erythritol | 5-100% |
| hydrogenated starch hydrolysate | 5-100% |
| stevia | 10 - 20,000 ppm |
| dihydrochalcones | 10 - 20,000 ppm |
| monellin | 10 - 20,000 ppm |
| steviosides | 10 - 20,000 ppm |
| glycyrrhizin | 10 - 20,000 ppm |
| dihydroflavenol | 10 - 20,000 ppm |
| L-aminodicarboxylic acid aminoalkenoic acid ester amides | 10 - 20,000 ppm |
| sodium or calcium saccharin salts | 10 - 20,000 ppm |
| cyclamate salts | 10 - 20,000 ppm |
| sodium, ammonium or calcium salt of 3,4-dihydro-6-methyl-1,2,3-oxathiazine-4-one-2,2-dioxide | 10 - 20,000 ppm |
| Acesulfame-K | 10 - 20,000 ppm |
| free acid form of saccharin | 10 - 20,000 ppm |
| Aspartame | 10 - 20,000 ppm |
| Alitame | 10 - 20,000 ppm |
| Neotame | 10 - 20,000 ppm |
| methyl esters of L-aspartyl-L-phenylglycerine and L-aspartyl-L-2,5-dihydrophenyl-glycine | 10 - 20,000 ppm |
| L-aspartyl-2,5-dihydro-L-phenylalanine | 10 - 20,000 ppm |
| L-aspartyl-L-(1-cyclohexen)-alanine | 10 - 20,000 ppm |
| Sucralose | 10 - 20,000 ppm |
| 1-chloro-1'-deoxysucrose | 10 - 20,000 ppm |
| 4-chloro-4-deoxy-alpha-D-galactopyranosyl-alpha-D-fructofuranoside | 10 - 20,000 ppm |
| 4-chloro-4-deoxygalactosucrose | 10 - 20,000 ppm |
| 4-chloro-4-deoxy-alpha-D-galactopyranosyl-1-chloro-1-deoxy-beta-D-fructo-furanoside | 10 - 20,000 ppm |
| 4, 1'-dichloro-4, 1'-dideoxygalactosucrose | 10 - 20,000 ppm |
| 1',6'-dichloro1',6'-dideoxysucrose | 10 - 20,000 ppm |
| 4-chloro-4-deoxy-alpha-D-galactopyranosyl-1,6-dichloro-1,6-dideoxy-beta-D-fructofuranoside | 10 - 20,000 ppm |
| 4,1',6'-trichloro-4,1',6'-trideoxygalactosucrose | 10-20,000 ppm |
| 4,6-dichloro-4,6-dideoxy-alpha-D-galactopyranosyl-6-chloro-6-deoxy-beta-D-fructofuranoside | 10 - 20,000 ppm |
| 4,6,6'-trichloro-4,6,6'-trideoxygalactosucrose | 10 - 20,000 ppm |
| 6,1',6'-trichloro-6,1',6'-trideoxysucrose | 10 - 20,000 ppm |
| 4,6-dichloro-4,6-dideoxy-alpha-D-galacto-pyranosyl-1,6-dichloro-1,6-dideox y-beta-D-fructofuranoside | 10 - 20,000 ppm |
| 4,6,1',6'-tetrachloro4,6,1',6'-tetradeoxygalacto-sucrose | 10 - 20,000 ppm |
| 4,6,1',6'-tetradeoxy-sucrose | 10 - 20,000 ppm |
| Thaumatin I and II | 10 - 20,000 ppm |
| Monatin | 10 - 20,000 ppm |
| | |

| **B. Sour** | |
|---|---|
| acetic acid | 0.00005 - 10% |
| adipic acid | 0.00005 - 10% |
| ascorbic acid | 0.00005 - 10% |
| butyric acid | 0.00005 -10% |
| citric acid | 0.00005 - 10% |
| formic acid | 0.00005 - 10% |
| fumaric acid | 0.00005 -10% |
| glyconic acid | 0.00005 - 10% |
| lactic acid | 0.00005 - 10% |
| phosphoric acid | 0.00005 - 10% |
| malic acid | 0.00005 - 10% |
| oxalic acid | 0.00005 - 10% |
| succinic acid | 0.00005 - 10% |
| tartaric acid | 0.00005 -10% |
| | |

| **C. Bitter/Astringent** | |
|---|---|
| quinine | 0.01 - 100 ppm |
| naringin | 0.01 - 100 ppm |
| quassia | 0.01 - 100 ppm |
| phenyl thiocarbamide (PTC) | 0.01 - 100 ppm |
| 6-n-propylthiouracil (Prop) | 0.01 - 100 ppm |
| alum | 0.01 - 100 ppm |
| salicin | 0.01 - 100 ppm |
| caffeine | 0.01 - 100 ppm |

| **D. Salty** | |
|---|---|
| sodium chloride | 0.01 - 1% |
| calcium chloride | 0.01 - 1% |
| potassium chloride | 0.01 - 1% |
| 1-lysine | 0.01 - 1% |

| **IV. Functional agents** | |
|---|---|
| **A. Surfactants** | |
| salts of fatty acids selected from the group consisting of C₈-C₂₄ | 0.001 - 2% |
| palmitoleic acid | 0.001 - 2% |
| oleic acid | 0.001 - 2% |
| eleosteric acid | 0.001 - 2% |
| butyric acid | 0.001 - 2% |
| caproic acid | 0.001 - 2% |
| caprylic acid | 0.001 - 2% |
| capric acid | 0.001 - 2% |
| lauric acid | 0.001 - 2% |
| myristic acid | 0.001 - 2% |
| palmitic acid | 0.001 - 2% |
| stearic acid | 0.001 - 2% |
| ricinoleic acid | 0.001 - 2% |
| arachidic acid | 0.001 - 2% |
| behenic acid | 0.001 - 2% |
| lignoceric acid | 0.001 - 2% |
| cerotic acid | 0.001 - 2% |
| sulfated butyl oleate | 0.001 - 2% |
| medium and long chain fatty acid esters | 0.001 - 2% |
| sodium oleate | 0.001 2% |
| salts of fumaric acid | 0.001 - 2% |
| potassium glomate | 0.001 - 2% |
| organic acid esters of mono- and diglycerides | 0.001 - 2% |
| stearyl monoglyceridyl citrate | 0.001 - 2% |
| succistearin | 0.001 - 2% |
| dioctyl sodium sulfosuccinate | 0.001 - 2% |
| glycerol tristearate | 0.001 - 2% |
| lecithin | 0.001 - 2% |
| hydroxylated lecithin | 0.001 - 2% |
| sodium lauryl sulfate | 0.001 - 2% |
| acetylated monoglycerides | 0.001 - 2% |
| succinylated monoglycerides | 0.001 - 2% |
| monoglyceride citrate | 0.001 - 2% |
| ethoxylated mono- and dialycerides | 0.001 - 2% |
| sorbitan monostearate | 0.001 - 2% |
| calcium stearyl-2-lactylate | 0.001 - 2% |
| sodium stearyl lactylate | 0.001 - 2% |
| lactylated fatty acid esters of glycerol and propylene glycerol | 0.001 - 2% |
| glycerol-lactoesters of C8-C24 fatty acids | 0.001 - 2% |
| polyglycerol esters of C8-C24 fatty acids | 0.001 - 2% |
| propylene glycol alginate | 0.001 - 2% |
| sucrose C8-C24 fatty acid esters | 0.001 - 2% |
| diacetyl tartaric and citric acid esters of mono- and diglycerides | 0.001 - 2% |
| triacetin | 0.001 - 2% |
| sarcosinate surfactants | 0.001 - 2% |
| isethionate surfactants | 0.001 - 2% |
| tautate surfactants | 0.001 - 2% |
| pluronics | 0.001 - 2% |
| polyethylene oxide condensates of alkyl phenols | 0.001 - 2% |
| products derived from the condensation of ethylene oxide with the reaction product of propylene oxide and ethylene diamine | 0.001 - 2% |
| ethylene oxide condensates of aliphatic alcohols | 0.001 - 2% |
| long chain tertiary amine oxides | 0.001 - 2% |
| long chain tertiary phosphine oxides | 0.001 - 2% |
| long chain dialkyl sulfoxides | 0.001 - 2% |
| | |

| **B. Breath freshening agents** | |
|---|---|
| spearmint oil | 0.001 - 10% |
| peppermint oil | 0.001 - 10% |
| wintergreen oil | 0.001 - 10% |
| sassafras oil | 0.001 - 10% |
| chlorophyll oil | 0.001 - 10% |
| citral oil | 0.001 - 10% |
| geraniol oil | 0.001 - 10% |
| cardamom oil | 0.001 - 10% |
| clove oil | 0.001 - 10% |
| sage oil | 0.001 - 10% |
| carvacrol oil | 0.001 - 10% |
| eucalyptus oil | 0.001 - 10% |
| cardamom oil | 0.001 - 10% |
| magnolia bark extract oil | 0.001 - 10% |
| marjoram oil | 0.001 - 10% |
| cinnamon oil | 0.001 - 10% |
| lemon oil | 0.001 - 10% |
| lime oil | 0.001 - 10% |
| grapefruit oil | 0.001 - 10% |
| orange oil | 0.001 - 10% |
| cinnamic aldehyde | 0.001 - 10% |
| salicylaldehyde | 0.001 - 10% |
| menthol | 0.001 - 10% |
| carvone | 0.001 - 10% |
| iso-garrigol | 0.001 - 10% |
| anethole | 0.001 - 10% |
| zinc citrate | 0.01 - 25% |
| zinc acetate | 0.01 - 25% |
| zinc fluoride | 0.01 - 25% |
| zinc ammonium sulfate | 0.01 - 25% |
| zinc bromide | 0.01 - 25% |
| zinc iodide | 0.01 - 25% |
| zinc chloride | 0.01 - 25% |
| zinc nitrate | 0.01 - 25% |
| zinc flurosilicate | 0.01 - 25% |
| zinc gluconate | 0.01 - 25% |
| zinc tartarate | 0.01 - 25% |
| zinc succinate | 0.01 - 25% |
| zinc formate | 0.01 - 25% |
| zinc chromate | 0.01 - 25% |
| zinc phenol sulfonate | 0.01 - 25% |
| zinc dithionate | 0.01 - 25% |
| zinc sulfate | 0.01 - 25% |
| silver nitrate | 0.01 - 25% |
| zinc salicylate | 0.01 - 25% |
| zinc glycerophosphate | 0.01 - 25% |
| copper nitrate | 0.01 - 25% |
| chlorophyll | 0.01 - 25% |
| copper chlorophyll | 0.01 - 25% |
| chlorophyllin | 0.01 - 25% |
| Hydrogenated cottonseed oil | 0.5 - 70% |
| chlorine dioxide | 0.025 - 0.50 % |
| beta cyclodextrin | 0.1 - 5% |
| zeolite | 0.1 - 5% |
| silica-based materials | 0.1 - 5% |
| carbon-based materials | 0.1 - 5% |
| enzymes such as laccase, papain, krillase, amylase, glucose oxidase | 0.1 - 5% |
| | |

| **C. Anti-microbial agents** | |
|---|---|
| cetylpyridinium chloride | 0.01 - 1% |
| zinc compounds | 0.01 - 25% |
| copper compounds | 0.01 - 25% |
| | |

| **D. Antibacterial agents** | |
|---|---|
| chlorhexidine | 0.0025-2% |
| alexidine | 0.0025-2% |
| quaternary ammonium salts | 0.0025-2% |
| benzethonium chloride | 0.0025-2% |
| cetyl pyridinium chloride | 0.0025-2% |
| 2,4,4'-trichloro-2'-hydroxy-diphenyl ether (triclosan) | 0.0025-2% |
| | |

| **E. Anti-calculus agents** | |
|---|---|
| pyrophosphates | 1 - 6% |
| triphosphates | 0.1 - 10% |
| polyphosphates | 0.1 - 10% |
| polyphosphonates | 0.1 - 10% |
| dialkali metal pyrophosphate salt | 1 - 6% |
| tetra alkali polyphosphate salt | 0.1 - 10% |
| tetrasodium pyrophosphate | 1 - 6% |
| tetrapotassium pyrophosphates | 1 - 6% |
| sodium tripolyphosphate | 0.1 - 10% |
| | |

| **F. Anti-plaque agents** | |
|---|---|
| chlorhexidine | 0.0025 - 2% |
| triclosan | 0.01 - 2% |
| hexetidine | 0.01 - 2% |
| zinc citrate | 0.01 - 25% |
| fluorones? | % - % |
| essential oils | 0.001 - 10% |
| sodium lauryl sulfate | 0.001 - 2% |
| | |

| **G. Fluoride compounds** | |
|---|---|
| sodium fluoride | 0.01 - 1% |
| sodium monofluorophosphate | 0.01 - 1% |
| stannous fluoride | 0.01 - 1% |
| | |

| **H. Quaternary ammonium compounds** | |
|---|---|
| Benzalkonium Chloride | 0.01 - 1% |
| Benzethonium Chloride | 0.01 - 1% |
| Cetalkonium Chloride | 0.01 - 1% |
| Cetrimide | 0.01 - 1% |
| Cetrimonium Bromide | 0.01 - 1% |
| Cetylpyridinium Chloride | 0.01 - 1% |
| Glycidyl Trimethyl Ammonium Chloride | 0.01 - 1% |
| Stearalkonium Chloride | 0.01 - 1% |
| | |

| **I. Remineralization agents** | |
|---|---|
| phosphopeptide-amorphous calcium phosphate | 0.1 - 5% |
| casein phosphoprotein-calcium phosphate complex | 0.1 - 5% |
| casein phosphopeptide-stabilized calcium phosphate | 0.1 -5% |
| | |

| **J. Pharmaceutical actives** | |
|---|---|
| drugs or medicaments | 0.0001 - 10% |
| vitamins and other dietary supplements | 0.0001 - 10% |
| minerals | 0.0001 - 10% |
| caffeine | 0.0001 - 10% |
| nicotine | 0.0001 - 10% |
| fruit juices | 2 - 60% |
| | |

| **K. Micronutrients** | |
|---|---|
| vitamin A | 0.0001 - 10% |
| vitamin D | 0.0001 - 10% |
| vitamin E | 0.0001 - 10% |
| vitamin K | 0.0001 - 10% |
| vitamin C (ascorbic acid) | 0.0001 - 10% |
| B vitamins (thiamine or B1, riboflavoin or B2, niacin or B3, pyridoxine or B6, folic acid or B9, cyanocobalimin or B12, pantothenic acid, biotin) | 0.0001 - 10% |
| sodium | 0.0001 - 10% |
| magnesium | 0.0001 - 10% |
| chromium | 0.0001 - 10% |
| iodine | 0.0001 - 10% |
| iron | 0.0001 - 10% |
| manganese | 0.0001 - 10% |
| calcium | 0.0001 - 10% |
| copper | 0.0001 - 10% |
| fluoride | 0.0001 - 10% |
| potassium | 0.0001 - 10% |
| phosphorous | 0.0001 - 10% |
| molybdenum | 0.0001 - 10% |
| selenium | 0.0001 - 10% |
| zinc | 0.0001 - 10% |
| L-carnitine | 0.0001 - 10% |
| choline | 0.0001 - 10% |
| coenzyme Q10 | 0.0001 - 10% |
| alpha-lipoic acid | 0.0001 - 10% |
| omega-3-fatty acids | 0.0001 - 10% |
| pepsin | 0.0001 - 10% |
| phytase | 0.0001 - 10% |
| trypsin | 0.0001 - 10% |
| lipases | 0.0001 - 10% |
| proteases | 0.0001 - 10% |
| cellulases | 0.0001 - 10% |
| ascorbic acid | 0.0001 - 10% |
| citric acid | 0.0001 - 10% |
| rosemary oil | 0.0001 - 10% |
| vitamin A | 0.0001 - 10% |
| vitamin E phosphate | 0.0001 - 10% |
| tocopherols | 0.0001 - 10% |
| di-alpha-tocopheryl phosphate | 0.0001 - 10% |
| tocotrienols | 0.0001 - 10% |
| alpha lipoic acid | 0.0001 - 10% |
| dihydrolipoic acid | 0.0001 - 10% |
| xanthophylls | 0.0001 - 10% |
| beta cryptoxanthin | 0.0001 - 10% |
| lycopene | 0.0001 - 10% |
| lutein | 0.0001 - 10% |
| zeaxanthin | 0.0001 - 10% |
| beta-carotene | 0.0001 - 10% |
| carotenes | 0.0001 - 10% |
| mixed carotenoids | 0.0001 - 10% |
| polyphenols | 0.0001 - 10% |
| flavonoids | 0.0001 - 10% |
| cartotenoids | 0.0001 - 10% |
| chlorophyll | 0.0001 - -10% |
| chlorophylin | 0.0001 - 10% |
| fiber | 0.0001 - 10% |
| anthocyanins | 0.0001 - 10% |
| cyaniding | 0.0001 - 10% |
| delphinidin | 0.0001 - 10% |
| malvidin | 0.0001 - 10% |
| pelargonidin | 0.0001 - 10% |
| peonidin | 0.0001 - 10% |
| petunidin | 0.0001 - 10% |
| flavanols | 0.0001 - 10% |
| flavonols | 0.0001 - 10% |
| catechin | 0.0001 - 10% |
| epicatechin | 0.0001 - 10% |
| epigallocatechin | 0.0001 - 10% |
| epigallocatechingallate | 0.0001 - 10% |
| theaflavins | 0.0001 - 10% |
| thearubigins | 0.0001 - 10% |
| proanthocyanins | 0.0001 -10% |
| quercetin | 0.0001 - 10% |
| kaempferol | 0.0001 - 10% |
| myricetin | 0.0001 - 10% |
| isorhamnetin | 0.0001 - 10% |
| flavononeshesperetin | 0.0001 - 10% |
| naringenin | 0.0001 - 10% |
| eriodictyol | 0.0001 -10% |
| tangeretin | 0.0001 -10% |
| flavones | 0.0001 -10% |
| apigenin | 0.0001 -10% |
| luteolin | 0.0001 - 10% |
| lignans | 0.0401 - 10% |
| phytoestrogens | 0.0001 - 10% |
| resveratrol | 0.0001 - 10% |
| isoflavones | 0.0001 - 10% |
| daidzein | 0.0001 - 10% |
| genistein | 0.0001 - 10% |
| soy isoflavones | 0.0001 - 10% |
| | |

| **L. Throat care actives** | |
|---|---|
| **(1) analgesics, anesthetics, antipyretic and anti-inflammatory agents** | |
| menthol | 10-500 ppm |
| phenol | 0.1 - 50% |
| hexylresorcinol | 0.1 - 50% |
| benzocaine | 0.1 - 50% |
| dyclonine hydrochloride | 0.1 - 50% |
| benzyl alcohol | 0.1 - 50% |
| salicyl alcohol | 0.1 - 50% |
| acetaminophen | 0.1 - 50% |
| aspirin | 0.1 - 50% |
| diclofenac | 0.1 - 50% |
| diflunisal | 0.1 - 50% |
| etodolacc | 0.1 - 50% |
| fenodrofen | 0.1 - 50% |
| flurbiprofen | 0.1 - 50% |
| ibuprofen | 0.1 - 50% |
| ketoprofen | 0.1 - 50% |
| ketorolac | 0.1 - 50% |
| nabumetone | 0.1 - 50% |
| naproxen | 0.1 - 50% |
| piroxicam | 0.1 - 50% |
| caffeine | 0.0001 - 10% |
| lidocaine | 0.1 - 50% |
| benzocaine | 0.1 - 50% |
| phenol | 0.1 - 50% |
| dyclonine | 0.1 - 50% |
| benzonotate | 0.1 - 50% |

| **(2) demulcents** | |
|---|---|
| slippery elm bark | 0.1 - 10% |
| pectin | 0.1 - 10% |
| gelatin | 0.1 - 10% |

| **(3) antiseptics** | |
|---|---|
| cetylpyridinium chloride | 0.01 - 1% |
| domiphen bromide | 0.01 - 1% |
| dequalinium chloride | 0.01 - 1% |

| **(4) antitussives** | |
|---|---|
| chlophedianol hydrochloride | 0.0001 - 2% |
| codeine | 0.0001 - 2% |
| codeine phosphate | 0.0001 - 2% |
| codeine sulfate | 0.0001 - 2% |
| dextromethorphan | 0.0001 - 2% |
| dextromethorphan hydrobromide | 0.0001 - 2% |
| diphenhydramine citrate | 0.0001 - 2% |
| diphenhydramine hydrochloride | 0.0001 - 2% |
| dextrorphan | 0.0001 - 2% |
| diphenhydramine | 0.0001 - 2% |
| hydrocodone | 0.0001 - 2% |
| noscapine | 0.0001 - 2% |
| oxycodone | 0.0001 - 2% |
| pentoxyverine | 0.0001 - 2% |

| **(5) throat soothing agents** | |
|---|---|
| honey | 0.5 - 90% |
| propolis | 0.1 - 10% |
| aloe vera | 0.1 - 10% |
| glycerine | 0.1 - 10% |
| menthol | 10-500 ppm |

| **(6) cough suppressants** | |
|---|---|
| codeine | 0.0001 - 2% |
| antihistamines | 0.0001 - 2% |
| dextromethorphan | 0.0001 - 2% |
| isoproterenol | 0.0001 - 2% |

| **(7) expectorants** | |
|---|---|
| ammonium chloride | 0.0001 - 2% |
| guaifenesin | 0.0001 - 2% |
| ipecac fluid extract | 0.0001 - 2% |
| potassium iodide | 0.0001 - 2% |

| **(8) mucolytics** | |
|---|---|
| acetylcycsteine | 0.0001 - 2% |
| ambroxol | 0.0001 - 2% |
| bromhexine | 0.0001 - 2% |

| **(9) antibistamines** | |
|---|---|
| acrivastine | 0.05 - 10% |
| azatadine | 0.05 - 10% |
| brompheniramine | 0.05 - 10% |
| chlorpheniramine | 0.05 - 10% |
| clemastine | 0.05 - 10% |
| cyproheptadine | 0.05 - 10% |
| dexbrompheniramine | 0.05 - 10% |
| dimenhydrinate | 0.05 - 10% |
| diphenhydramine | 0.05 - 10% |
| doxylamine | 0.05 - 10% |
| hydroxyzine | 0.05 - 10% |
| meclizine | 0.05 - 10% |
| phenindamine | 0.05 - 10% |
| phenyltoloxamine | 0.05 - 10% |
| promethazine | 0.05 - 10% |
| pyrilamine | 0.05 - 10% |
| tripelennamine | 0.05 - 10% |
| triprolidine | 0.05 - 10% |
| astemizole | 0.05 - 10% |
| cetirizine | 0.05 - 10% |
| ebastine | 0.05 - 10% |
| fexofenadine | 0.05 - 10% |
| loratidine | 0.05 - 10% |
| terfenadine | 0.05 - 10% |

| **(10) nasal decongestants** | |
|---|---|
| phenylpropanolamine | 0.1 - 50% |
| pseudoephedrine | 0.1 - 50% |
| ephedrine | 0.1 - 50% |
| phenylephrine | 0.1 - 50% |
| oxymetazoline | 0.1 - 50% |
| menthol | 0.1 - 50% |
| camphor | 0.1 - 50% |
| borneol | 0.1 - 50% |
| ephedrine | 0.1 - 50% |
| eucalyptus oil | 0.001 - 10% |
| peppermint oil | 0.001 - 10% |
| methyl salicylate | 0.001 - 10% |
| bornyl acetate | 0.001 - 10% |
| lavender oil | 0.001 - 10% |
| wasabi extracts | 0.001 - 10% |
| horseradish extracts | 0.001 - 10% |
| | |

| **M. Tooth whitening/ Stain removing agents** | |
|---|---|
| surfactants | 0.001 - 2% |
| chelators | 0.1 - 10% |
| abrasives | 0.1 - 5% |
| oxidizing agents | 0.1 - 5% |
| hydrolytic agents | 0.1 - 5% |
| | |

| **N. Energy boosting agents** | |
|---|---|
| caffeine | 0.0001 - 10% |
| vitamins | 0.0001 - 10% |
| minerals | 0.0001 - 10% |
| amino acids | 0.0001 - 10% |
| ginseng extract | 0.0001 - 10% |
| ginko extract | 0.0001 - 10% |
| guarana extract | 0.0001 - 10% |
| green tea extract | 0.0001 - 10% |
| taurine | 0.0001 - 10% |
| kola nut extract | 0.0001 - 10% |
| yerba mate leaf | 0.0001 - 10% |
| Niacin | 0.0001 - 10% |
| rhodiola root extract | 0.0001 - 10% |

| **O. Concentration boosting agents** | |
|---|---|
| caffeine | 0.0001 - 10% |
| ginko extract | 0.0001 - 10% |
| gotu cola (centella asiatica) | 0.0001 - 10% |
| German chamomile | 0.0001 - 10% |
| avina sativa | 0.0001 - 10% |
| phosphatidyl serine | 0.0001 - 10% |
| aspalathus linearis | 0.0001 - 10% |
| pregnenolone | 0.0001 - 10% |
| rhodiola root extract | 0.0001 - 10% |
| theanine | 0.0001 - 10% |
| vinpocetine | 0.0001 - 10% |
| | |

| **P. Appetite suppressants** | |
|---|---|
| caffeine | 0.0001 - 10% |
| guarana extract | 0.0001 - 10% |
| hoodia gordonii | 0.0001 - 10% |
| glucomannan | 0.0001 - 10% |
| calcium | 0.0001 - 10% |
| garcinia cambogia extract | 0.0001 - 10% |
| n-acetyl-tyrosine | 0.0001 - 10% |
| soy phospholipids | 0.0001 - 10% |
| | |

| **V. Colors** | |
|---|---|
| Annatto extract | 0.5 - 20% |
| Beta-carotene | 0.5 - 20% |
| Canthaxanthin | 0.5 - 20% |
| Grape color extract | 0.5 - 20% |
| Turmeric oleoresin | 0.5 - 20% |
| B-Apo-8'-carotenal | 0.5 - 20% |
| Beet powder | 0.5 - 20% |
| Caramel color | 0.5 - 20% |
| Carmine | 0.5 - 20% |
| Cochineal extract | 0.5 - 20% |
| Grape skin extract | 0.5 - 20% |
| Saffron | 0.5 - 20% |
| Tumeric | 0.5 - 20% |
| Titanium dioxide | 0.05 - 2% |
| F.D. & C. Blue No.1 | 0.05 - 2% |
| F.D.& C. Blue No.2 | 0.05 - 2% |
| F.D.& C. Green No.1 | 0.05 - 2% |
| F.D. & C. Red No.40 | 0.05 - 2% |
| F.D. & C. Red No.3 | 0.05 - 2% |
| F.D. & C. Yellow No.6 | 0.05 - 2% |
| F.D. & C. Yellow No.5 | 0.05 - 2% |

The solid candy composition is not limited to a hard, saturated solid, and may include aerated solids, such as whips and frappes. The solid composition may also include fudges, nougats, taffies, or other moldable solids. The solid composition may further include boiled candies or isomalt-based candies. Further, the solid composition may be in a particulate or powder form, whether compacted or free. The solid composition may additionally be a combination of solids, such as a solid suspension, wherein particles are dispersed within a chewy or boiled candy solid.

It will be understood by one skilled in the art that the solid candy may include encapsulated sweeteners or particulates, and such particulates may include additional flavors or materials. Encapsulated sweeteners are disclosed, for example, in U.S. Patent No. 4,911,934 to Yang et al. The caffeine or other active(s) may additionally be encapsulated with a variety of encapsulating agents, including triglycerides, fats, ion exchange resins, or any other encapsulating agent. Encapsulation may be achieved by any commonly known methods, such as by spray forming, spray chilling, coacervation, fluidized bed drying, adsorption, absorption, matrix encapsulation, or any other method.

The solid composition may further include cooling agents, warming agents, or tingling agents as described above. Such flavors, cooling agents, warming agents, tingling agents and the like may be encapsulated with the caffeine or other active(s). The solid center fill region may completely fill the center of the-gum composition or it may partially fill the center of the gum composition.

In some embodiments where the solid center can change to a liquid, the solid center can include a mixture of invertase and sucrose such invertase operates on sucrose to form liquid invert sugar resulting in a liquid interior portion over time. In some embodiments, the solid candy composition can be a fat with melting characteristics such that at manufacturing temperatures the fat is solid and then melts to become liquid at storage temperatures. In some embodiments, the solid candy can include liquid-filled gelatin or sucrose beads that release liquid when ruptured or disrupted.

It is known that certain active ingredients have a taste that is unpleasant to the user, called an "off-taste". Commonly, this off-taste is bitterness of the active. In light of this off-taste, the composition of the candy region may provide for sufficient taste-masking effect, shielding the user from the off-taste of the active ingredients. The taste-masking effect may be achieved through the use of any suitable taste-masking ingredients, such as fats.

As used herein, the term "fat" refers to any lipid material and can be solid or liquid. Suitable fats can include those of vegetable origin, animal origin, or mixtures thereof. Suitable vegetable fats can include soybean fats, cottonseed fats, corn fats, almond fats, peanut fats, sunflower fats, rapeseed fats, olive fats, palm fats, palm kernel fats, illipe fats, shea fats, coconut fats, cocoa butter fats and mixtures thereof. It will be understood by those skilled in the art and these vegetable fats can be hydrogenated to varying degrees as desired. Suitable animal fats can include dairy fats such as milk fat and butter.

The amount of fat in the candy region may provide a sufficient level of taste-masking. Any amount of fat may be contemplated. The fat can be present in an amount of about 1-15% by weight of the candy region. In some embodiments, the amount of fat in the candy region is about 2 - 14%, about 3% - 13%, about 4 - 12%, about 5 - 11%, about 6 - 10%, or about 7 - 9%. In other embodiments, the fat can be present in an amount of about 0.5-10% by weight of the chewing gum composition as a whole. In still other embodiments, the amount of fat in the chewing gum composition as a whole is about 1 - 9%, about 1.5 - 8%, about 2 - 7%, about 2.5 - 6%, about 3 - 5%, or about 3.5 - 4%.

In some embodiments, emulsifiers can be added to the candy region. Suitable emulsifiers can include, but are not limited to, lecithin or other phospholipids, polyglycerol polyricinoleate, monoglycerides, diglycerides, sodium steoryl lactylate, citric acid esters of monoglycerides and diglycerides, distilled monoglycerides, acetylated monoglycerides, mono- and di-glycerides of C₁₆ - C₂₀ fatty acids such as glyceryl monostearate, glycerol triacetate, fatty acids, sucrose esters, and combinations thereof

The features and advantages are more fully shown by the following examples which are provided for purposes of illustration, and are not to be construed as limiting the invention in any way.

### EXAMPLES

### Example 1:

**Table 1: Chewing Gum Composition**

| **Component** | **% by weight** |
|---|---|
| Gum base | 25.0 |
| Lecithin | 0.5 |
| Sugar | 61.5 |
| High Fructose Corn Syrup | 7.0 |
| Glycerin | 0.5 |
| Mint Flavor Blend | 2.45 |
| APM Free | 0.07 |
| ACE-K Free | 0.01 |
| Encapsulated APM | 2.56 |
| Encapsulated ACE-K | 0.51 |

A chewing gum composition was prepared according to the composition in Table 1 above.

**Table 2: Chewy Nougat Solid Candy Composition**

| **Component** | **% by weight** |
|---|---|
| Sugar | 41.6 |
| High Fructose Corn Syrup | 41.6 |
| Gelatin | 1.89 |
| Water | 2.84 |
| Fat | 3.02 |
| Caffeine | 7.56 |
| Flavor | 1.51 |

A chewy nougat candy composition was prepared according to the composition in Table 2 above.

The chewing gum composition was prepared by first melting the gum base at a temperature of about 90°C. Once melted, the filler was added to the base and stirred for approximately 0.5 min. Sugar, high fructose corn syrup and glycerin were then added while mixing for 3.5 min. The mint flavor blend was mixed and added while mixing for 3.5 min. APM Free, ACE-K Free, Encapsulated APM and Encapsulated ACE-K were added and mixed for 3.5 min. The temperature was dropped to about 43°C.

The chewy nougat center fill composition was prepared by dissolving gelatin in water at about 60°C. Sugar and corn syrup were heated in a separate pot to a boil at about 130°C. Caffeine was gradually mixed into the boiled sugars, and the gelatin solution was added when the mixture reached about 93°C. The fat was melted and slowly added to the batch along with flavor. The mixture was transferred to a cooling tray.

The resulting mix then was formed into the desired final shape employing conventional techniques, e.g., extruded, rolled and cut into sticks, cast into pellets and then optionally coated, or pressed into tablets, among other conventional techniques. Upon chewing, the product achieves the effect of providing a dosage of caffeine while maintaining a pleasurable taste and texture.

### Example 2:

**Table 3: Chewing-Gum Composition**

| **Component** | **% by weight** |
|---|---|
| Gum base | 25.0 |
| Lecithin | 0.5 |
| Sugar | 61.5 |
| High Fructose Corn Syrup | 7.0 |
| Glycerin | 0.5 |
| Sweet Mint Flavor Blend | 3.31 |
| APM Free | 0.07 |
| ACE-K Free | 0.01 |
| Encapsulated APM | 2.56 |
| Encapsulated ACE-K | 0.51 |

A chewing gum composition was prepared according to the composition in Table 1 above.

**Table 4: Chewy Nougat Center-Fill Composition**

| **Component** | **% by weight** |
|---|---|
| Sugar | 41.59 |
| High Fructose Corn Syrup | 41.59 |
| Gelatin | 1.89 |
| Water | 2.84 |
| Fat | 3.02 |
| Caffeine | 7.56 |
| Flavor | 1.51 |

A chewy nougat candy composition was prepared according to the composition in Table 2 above.

The chewing gum composition was prepared by first melting the gum base at a temperature of about 90°C. Once melted, the filler was added to the base and stirred for approximately 0.5 min. Sugar, high fructose corn syrup and glycerin were then added while mixing for 3.5 min. The sweet mint flavor blend was mixed and added while mixing for 3.5 min. The temperature was then reduced to about 48°C, and then APM Free, ACE-K Free, Encapsulated APM and Encapsulated ACE-K were added and mixed for 3.5 min. The temperature was dropped to about 43°C.

The chewy nougat center fill composition was prepared by dissolving gelatin in water at about 60°C. Sugar and corn syrup were heated in a separate pot to a boil at about 130°C. Caffeine was gradually mixed into the boiled sugars, and the gelatin solution was added when the mixture reached about 93°C. The fat was melted and slowly added to the batch along with flavor. The mixture was transferred to a cooling tray.

The resulting mix then was formed into the desired final shape employing conventional techniques, e.g., extruded, rolled and cut into sticks, cast into pellets and then optionally coated, or pressed into tablets, among other conventional techniques. Upon chewing, the product achieves the effect of providing a dosage of caffeine while maintaining a pleasurable taste and texture.

### Multi-region Chewing Gum Examples

The examples below demonstrate some embodiments where gum base, chewing gum, or both are added to sugar or sugar-free solid candy compositions with actives. In some examples, the solid candy composition includes a hydrocolloid such as gelatin which can provide a textural benefit. In some embodiments, the solid candy composition includes a fat which can provide a taste masking benefit.

Examples 10-50 shown in Table 1 are directed to gum base compositions and examples 100-140 shown in Table 2 are directed to chewing gum compositions. The gum base and chewing gum compositions can then with the elastomeric component of examples 200-240 and 300-340 shown in Tables 3 and 4 to form multi-region chewing gums.

**Table 1**

| **Examples 10** - **50; Gum Bases** | | | | | |
|---|---|---|---|---|---|
| | **% w/w** | | | | |
| **Ingredient** | **10** | **20** | **30** | **40** | **50** |
| | **High Filler** | **Low Filler** | **Without Butyl Rubber** | **Highly Plasticized (Soft)** | **Less Plasticized (Firm)** |
| **Elastomers (High Molecular Weight)** | | | | | |
| Butyl Rubber | 8 - 12 | 4 - 8 | 0 | 4 - 8 | 6 - 10 |
| Styrene-butadiene Rubber | | | 5 - 11 | | |
| | | | | | |

| **Elastomers (Low Molecular Weight)** | | | | | |
|---|---|---|---|---|---|
| Polyisobutylene | 10 - 20 | 8 - 10 | 0 | 5 - 10 | 10 - 20 |
| | | | | | |
| **Softeners** | | | | | |
| Rosin esters | 5 - 30 | 5 - 10 | 15 - 20 | 20 - 35 | 5 - 10 |
| Waxes | 4 - 10 | 8 - 12 | 5 - 15 | 5 - 10 | 5 - 10 |
| Vegetable oils (hydrogenated) | 10 - 30 | 15 - 25 | 5 - 15 | 2 - 5 | 20 - 30 |
| | | | | | |

| **Texture Modifiers (polymers)** | | | | | |
|---|---|---|---|---|---|
| Polyvinyl Acetate | 5 - 15 | 10 - 30 | 15 - 25 | 10 - 20 | 20 - 30 |
| | | | | | |
| **Emulsifiers** | 3 - 8 | 5 - 10 | 3 - 8 | 0 - 2 | 2 - 5 |
| Triacetin | | | | | |
| Glycerol Monostearate | | | | | |
| Lecithin | | | | | |
| | | | | | |

| **Fillers** | | | | | |
|---|---|---|---|---|---|
| Calcium Carbonate | 30 - 40 | 0 - 10 | 10 - 20 | | |
| Talc | | | | 10 - 20 | 10 - 20 |
| | | | | | |
| **Totals:** | 100 | 100 | 100 | 100 | 100 |

Processing: The elastomers are added to a preheated kettle and mixed for 3 minutes under high shear until the mass reaches a temperature of 190 F. The fillers are then added and mixed for 3 minutes. Rosin esters are slowly added next and mixing continues for 5 minutes. Then, the following materials are added in sequence while mixing is continued: polyvinyl acetate, waxes, hydrogenated vegetable oils, and emulsifiers. The final mass is blended for about 30 minutes. The final temperature should range from 160 F to 210 F. The completed gum base can then be discharged from the kettle and put into coated pans. The completed gum base is allowed to cool and harden before de-panning.

**Table 2**

| **Examples 100 - 140; Chewing Gums** | | | | | |
|---|---|---|---|---|---|
| **Ingredient** | **100** | **110** | **120** | **130** | **140** |
| Sucrose | 30%-70% | 0 | 25%-50% | 30%-70% | 0 |
| Corn Syrup | 10%-30% | 0 | 10-30% | 10%-30% | 0 |
| Hydrogenated Starch Hydrolysates | 0 | 0.1-10% | 0.1-10% | | 0.1-10% |
| Sorbitol | 0 | 30%-70% | 10%-30% | | 30%-70% |
| Erythritol | 0 | 0-20% | 1%-10% | | 0-20% |
| Xylitol | 0 | 0-20% | 0-10% | | 0-20% |
| Maltitol | 0 | 0-60% | 0-30% | | 0-60% |
| Isomalt | 0 | 0-20% | 0-10% | | 0-20% |
| Gum Base from Example 10 | 40%-60% | | | | |
| Gum Base from Example 20 | | 10%-30% | | | |
| Gum Base from Example 30 | | | 20%-50% | | |
| Gum Base from Example 40 | | | | 30%-60% | |
| Gum Base from Example 50 | | | | | 10%-30% |
| Glycerin | 0.1-1% | 0.1-15% | 0.1-5% | 0.1-1% | 0.1-1% |
| Lecithin | 0.1-10% | 0.1-10% | 0.1%-10% | 0.1-10% | 0.1-10% |
| Vegetable Oil | 5-15% | 0.1-5% | 0.1-10% | 0.1-5%% | 5-15% |
| Flavor | 2-5% | 0.1-3% | 0.1-3% | 0.1-3% | 2-5% |
| Acid(s) | 0.1-10% | 0.1-10% | | 0.1-10% | |
| Color(s) | 0.001-0.2% | .001-0.2% | 0.001-0.2% | 0.001-0.2% | 0.001-0.2% |
| Free Sweetener | | 0.1-0.5 | 0.01%-0.2 | | 0.01%-0.2 |
| Encapsulated Sweetener | | 0.5-7% | 0.1%-2% | | 0.1%-2% |
| Cooling Compounds | 0.01-0.25% | 0.1-0.25% | 0.1-0.25% | 0.01-0.25% | 0.1-0.25% |

Processing: Gum base is placed into a mixer and heated to a temperature of about 65C. The liquid and powdered bulk sweeteners are added with mixing and mixing proceeds until a homogeneous mass is achieved. Minor ingredients including flavor(s), acid(s), color(s) and sweetener(s) are added during the final 5-10 minutes of mixing. The thoroughly mixed batch is then discharged from the mixer.

**Table 3**

| **Examples 200-240; Multi-region Chewing Gum with Gum Base and Solid Candy** | | | | | |
|---|---|---|---|---|---|
| **Ingredient** | **200** | **210** | **220** | **230** | **240** |
| **Solid Candy Composition:** | | | | | |
| Sucrose | 30%-60% | | 30-50% | | 30%-60% |
| Corn Syrup | 60%-30% | | 30-50% | | 60%-30% |
| Water | 10%-20% | 10-30% | 10-25% | 10-30% | 10%-20% |
| Fat | 0%-8% | | 0%-8% | | 0%-8% |
| Hydrocolloids | | | 0%-8% | | 0%-8% |
| Lecithin | 0%-0.8% | 0%-1% | 0%-1% | | 0%-1% |
| GMS | 0%-0.8% | 0%-1% | 0%-1% | | 0%-1% |
| Hydrogenated Starch Hydrolysates | | 0%-10% | | | |
| Sorbitol | | 0%-60% | | | |
| Erythritol | | | 0%-15% | 0%-25% | |
| Xylitol | | | | 0%-60% | |
| Maltitol | | | | 0-60% | |
| Isomalt | | 0%-80% | 0%-30% | | |
| Mannitol | | 0-25% | | | |
| Flavor | 0.5%-5.0% | 0.3%-2.5% | 0.3%-2.5% | 0.3%-2.5% | 0.3%-3.0% |
| Acid(s) | 0.1-3.0% | | 0.1-3.0% | | 0.1-3.0% |
| Color(s) | 0% -0.2% | 0% -0.2% | 0% -0.2% | 0%-0.2% | 0% -0.2% |
| Free Sweetener | | 0.1%-0.5% | 0.01-0.2% | 0.01-0.2% | |
| Encapsulated Sweetener | | 0.5%-7% | 0.1%-2% | 0.1%-2% | 0.1%-2% |
| Cooling Compounds | 0.01-0.25% | | 0.01-0.25% | | 0.01-0.25% |
| Caffeine | 0.5-5% | | | | |
| Encapsulated Caffeine | | 0.5-10% | | | |
| Green Tea Extract | | | 0.1-5% | | |
| Epigallocatechin gallate | | | | 0.1-5% | |
| Vitamin B6 | | | | | 0.001-1% |

| **Elastomeric Component:** | | | | | |
|---|---|---|---|---|---|
| Gum Base from Example 10 | 5%-40% | | | | |
| Gum Base from Example 20 | | 5%-40% | | | |
| Gum Base from Example 30 | | | 5%-40% | | |
| Gum Base from Example 40 | | | | 5%-40% | |
| Gum Base from Example 50 | | | | | 5%-40% |

### Candy Making Processing:

Weight formula portions of sugar, corn syrup, Sorbitol, Xylitol, Erythritol, maltitol,
Mannitol, Isomalt, and water.
Start Boiling.
While boiling add fat, Lecithin, GMS and mix
Boil to cook temperature
Add Hydrocolloid in pre-dissolved slurry format
Add flavors, acids, and colors
Add active(s) and mix thoroughly

### Multi-region Chewing Gum Making Processing:

Heat gum base until molten
Form multi-region chewing gum by:
   1. Co-mixing
      a. Mixing solid candy composition with Gum base at 70°-110
      b. Temper on belt or table
      c. Pull /knead; or
   2. Center-filling
      a. Co-extrude solid candy composition with gum base such that the solid candy composition forms an interior region; or
      b. Co-extrude solid candy composition with gum base such that the gum base forms an interior region
Form by chain die, rotary die, drop roller, or cut and wrap
The compositions can also be formed using confectionery processes to produce shapes including candy canes, sticks, tubes, slabs, etc.

**Table 4**

| **Examples 300** - **340; Multi**-**region Chewing Gum with Chewing Gum and/or Gum Base and Solid Candy** | | | | | |
|---|---|---|---|---|---|
| | **% w/w** | | | | |
| **Ingredient** | **300** | **310** | **320** | **330** | **340** |
| **Solid Candy Composition:** | | | | | |
| Sucrose | 10%-35% | | 10%-30% | | 30%-60% |
| Corn Syrup | 2%-18% | | 10%-30% | | 60%-30% |
| Water | 3%-12% | 3%-18% | 3%-15% | 10-30% | 10%-20% |
| Fat | 0%-5% | | 0%-5% | | 0%-5% |
| Hydrocolloids | | | 0%-5% | | 0%-5% |
| Lecithin | 0%-0.5% | 0%-0.6% | 0%-0.6% | | 0%-0.6% |
| GMS | 0%-0.5% | 0%-0.6% | 0%-0.6% | | 0%-0.6% |
| Hydrogenated Starch Hydrolysates | | 0%-6% | | | |
| Sorbitol | | 0%-35% | | | |
| Erythritol | | | 0%-9% | 0%-25% | |
| Xylitol | | | | 0%-60% | |
| Maltitol | | | | 0-60% | |
| Isomalt | | 0%-50% | 0%-18% | | |
| Mannitol | | 0-15% | | | |

| | **% w/w** | | | | |
|---|---|---|---|---|---|
| **Ingredient** | **300** | **310** | **320** | **330** | **340** |
| Flavor | 0,15%-3.0% | 0.1%-1.5% | 0.1%-1.5% | 0.1%-1.5% | 0.3%-3.0% |
| Acid(s) | 0.1%-1.5% | | 0.1%-1.5% | | 0.1%-1.5% |
| Color(s) | 0%-0.15% | 0%-0.12% | 0%-0.12% | 0%-0.12% | 0%-0.12% |
| Free Sweetener | | 0.1%-0.5% | 0.01-0.2% | 0.01-0.2% | |
| Encapsulated Sweetener | | 0.5%-7% | 0.1%-2% | 0.1%-2% | 0.1%-2% |
| Cooling Compounds | 0.01-0.25% | | 0.01-0.25% | | 0.01-0.25% |
| Caffeine | 0.5-5% | | | | |
| Encapsulated Caffeine | | 0.5-10% | | | |
| Green Tea Extract | | | 0.1-5% | | |
| Epigallocatechin gallate | | | | 0.1-5% | |
| Vitamin B6 | | | | | 0.001-1% |

| **Elastomeric Component:** | | | | | |
|---|---|---|---|---|---|
| Gum Base from Example 10 | | | | | |
| Gum Base from Example 20 | | | | | |
| Gum Base from Example 30 | | | | | |
| Gum Base from Example 40 | | | | | 1%-5% |
| Gum Base from Example 50 | | | | 1%-5% | |
| | | | | | |
| Chewing Gum from Example 100 | 50%-80% | | | | |
| Chewing Gum from Example 110 | | 50%-80% | | | |
| Chewing Gum from Example 120 | | | 50%-80% | | |
| Chewing Gum from Example 130 | | | | 48%-75% | |
| Chewing Gum from Example 140 | | | | | 48%-75% |
| | | | | | |
| Totals: | 100 | 100 | 100 | 100 | 100 |

### Candy Making Processing:

Weigh formula portions of sugar, corn syrup, Sorbitol, Xylitol, Erythritol, maltitol,
Mannitol, Isomalt, and water.
Start Boiling.
While boiling add fat, Lecithin, GMS and mix
Boil to cook temperature
Add Hydrocolloid in pre-dissolved slurry format
Add flavors, acids, and colors
Add active(s) and mix thoroughly

### Multi-region chewing Gum Making Processing:

Heat gum base until molten
Fold in chewing gum
Form multi-region chewing gum by:
   1. Co-mixing
      a. Mixing solid candy composition with Gum base and/or chewing gum at 70°-110
      b. Temper on belt or table
      c. Pull /knead; or
   2. Center-filling
      a. Co-extrude solid candy composition with gum base and/or chewing gum such that the solid candy composition forms an interior region; or
      b. Co-extrude solid candy composition with gum base and/or chewing gum such that the gum base and/or chewing gum forms an interior region
Temper on belt or table
Pull /knead
Form by chain die, rotary die, drop roller, or cut and wrap
The compositions can also be formed using confectionery processes to produce shapes including candy canes, sticks, tubes, slabs, etc.

The next sets of examples are directed to embodiments where the multi-region chewing gum comprises a soft candy composition. Examples 400-470 are directed to various soft candy compositions and Examples 500-570 shown in Table 5 are directed to multi-region chewing gum compositions including those soft candy compositions.

### Example 400 - Caramel Soft Candy

| | |
|---|---|
| Water | 9.43% w/w |
| White granular sugar | 14.12% |
| Brown sugar | 14.12% |
| Glucose syrup | 20-25% |
| Sweet condensed milk | 25.73% |
| Hydrogenated vegetable fat | 11.29% |
| Glyceryl monostearate | 0.71% |
| Salt | 0.44% |
| Caffeine | 1-10% |

The ingredients are mixed together and heated slowly until thoroughly dissolved and mixed. Heating is continued with mixing until a final temperature of 118C for soft caramels, 121C for medium caramels and 128C for hard caramels is reached. The mass is then discharged from the cooker and cooled, cut and wrapped. The caffeine can be mixed in during cooling.

### Example 410 - Fudge Soft Candy

| | |
|---|---|
| Sweet Condensed Milk | 41.36% w/w |
| Butter | 11.69% |
| Granulated Sugar | 10-25% |
| Semisweet Chocolate | 25.85% |
| Glucose Syrup | 1.03% |
| Vanilla | 0.42% |
| Epigallocatechin gallate (EGCG) | 0.5-10% |

The sweet condensed milk, sugar and butter are combined in a steam jacketed kettle and heated with stirring until the temperature reaches 150F. Vanilla is added during this mixing step. Heating continues until the mass reaches a temperature of 238F at which point the steam is turned off and the chocolate is added with vigorous stirring. Next, the glucose syrup is added with stirring. The mass is cooled with stirring until it reaches a temperature of 180-190F. The EGCG is mixed in during cooling. The mass is then poured onto a marble slab and worked until a desired crystallization/texture is reached. The fudge is then cut and wrapped.

### Example 420 - Truffle Soft Candy

| | |
|---|---|
| Fondant | 70-75% w/w |
| Cocoa liquor | 8.80% |
| Sweet condensed milk | 17.70% |
| Vanilla | to taste |
| Vitamin B6 | 0.001-1% |

The fondant is melted at 60-63C and the cocoa liquor is stirred into the melted fondant. In a separate vessel, the sweet condensed milk is heated to 93C with stirring to prevent scorching and held for 15 minutes. Next, the heated milk is added to the fondant/cocoa liquor mixture and mixed well. The vitamin B6 is added and mixed thoroughly. The truffle mass can then be shaped and packaged.

### Example 430 - Marshmallow Soft Candy

| | |
|---|---|
| Gelatin | 2.03% w/w |
| Water | 9.44% |
| Egg albumen | 0.67% |
| Water | 4.06% |
| Sugar | 30-40% |
| Glucose syrup | 16.25% |
| Water | 13.50% |
| Invert sugar | 16.13% |
| Flavor | to taste |
| Encapsulated caffeine | 0.5-5% |

The gelatin is soaked in the first quantity of water and then dissolved by slowly warming the mixture. In a separate vessel, the egg albumen is likewise soaked in the second quantity of water and dissolved by slowly warming the mixture. The gelatin and egg albumen solutions are then mixed together. Separately, the sugar, glucose syrup and third quantity of water are heated together to dissolve and then cooked to 112C. The invert sugar is then added to the cooked sugar solution and cooled to 71C. The encapsulated caffeine is added towards the end of the cooling cycle. The sugars are then added to the mixed gelatin/egg albumen and aerated to a density of 0.40 to 0.50. The aerated mass is then cast into starch and dried for 16 to 24 hours at 27C prior to de-molding and wrapping.

### Example 440 - Chewy Nougat Soft Candy

| | |
|---|---|
| Egg albumen | 0.37% w/w |
| Water | 3.13% |
| Sugar | 6.59% |
| Water | 2.00% |
| Sugar | 34-48% |
| Glucose syrup | 36.63% |
| Water | 14.65% |
| Dextromethorphan | 0.0001-2% |

The egg albumen is dissolved in the first quantity of water while the first quantity of sugar is dissolved in the second quantity of water. The egg albumen and sugar solution are mixed together and aerated. In a separate vessel, the second quantity of sugar is dissolved in the third quantity of water and the glucose syrup is added with mixing. This sugar solution is then boiled to 141C. The boiled sugar solution is then added to the whipped egg albumen/sugar solution in a thin stream. The mass is then poured onto a cooling table where the dextromethorphan is added before the mass is cut and wrapped.

### Example 450 - Starch Jellies Soft Candy

| | |
|---|---|
| Sugar | 15-20% w/w |
| Glucose syrup | 23.34% |
| Invert syrup | 4.50% |
| Water | 23.63% |
| Thin boiling starch | 6.04% |
| Water | 23.63% |
| Citric acid | 0.02% |
| Flavor | to taste |
| Color | as needed |
| Guarana extract | 0.0001-10% |

The sugar is dissolved in the first quantity of water and mixed together with the glucose syrup and invert sugar and brought to a boil. In a separate vessel, a starch slurry is prepared by mixing the starch with the second quantity of water (cold). The starch slurry is added to the boiling sugar solution in a thin stream with mixing. The mixture is cooked until it reaches 76 - 78% solids. The guarana extract is added as the mixture cools. The mass is then cast into starch and allowed to set up prior to de-molding and wrapping.

### Example 460 - Gelatin Wellies Soft Candy

| | |
|---|---|
| Sugar | 38-42% w/w |
| Glucose syrup | 30.25% |
| Water | 16.80% |
| Gelatin | 5.37% |
| Water | 5.37% |
| Citric acid | 0.84% |
| Water | 0.84% |
| Flavor | to taste |
| Color | as needed |
| Hoodia extract | 0.0001-5% |

The sugar and glucose syrup are dissolved together in the first quantity of water and boiled to 115C. Separately, the gelatin is soaked in the second quantity of water and then warmed to dissolve the gelatin. The sugar solution is cooled to 80C and the gelatin is added to the sugar. Lastly, the citric acid (dissolved in the third quantity of water) is added to the mass along with flavor and color and hoodia extract. The product can then be molded, allowed to solidify. Once the candies have solidified, they can be de-molded and packaged.

### Example 470 - Sugar free Chewy Candy

| | |
|---|---|
| Maltitol | 25-35%w/w |
| Polydextrose | 25-35% |
| Soluble Fiber | 5-10% |
| Sucralose | 0.001-0.05% |
| Vegetable Oil | 3-8% |
| Lecithin | 0.5-1.2% |
| Gelatin | 1-5% |
| Food Acid | 5-15% |
| Food Color | as needed |
| Flavor | 0.5-2.3% |
| Maltitol Fondant | 1.5-9% |
| Omega 3 fatty acids | 0.01-10% |

The maltitol, polydextrose, and soluble fiber are mixed together with enough water to dissolve the solids. The mixture is then heated to boiling when the vegetable oil and sucralose are added. Heating is continued until a temperature of 130C is reached. With the heat off, the pre-hydrated gelatin, acid, omega 3 fatty acids, and color are added and mixed for one minute. The mixture is transferred to a tempering table set for 65F at which point the flavor and fondant are folded in. The mixture can then be pulled until the desired texture is achieved.

**Table 5**

| **Examples 500 - 560; Candy Gum with Soft Candy Cooked Saccharide Components** | | | | | | | | |
|---|---|---|---|---|---|---|---|---|
| **Ingredient** | **% w/w** | | | | | | | |
| | **500** | **510** | **520** | **530** | **540** | **550** | **560** | **570** |
| **Soft Candy Composition:** | | | | | | | | |
| Sucrose | | | 10-15 | | | | 5-10 | |
| Sorbitol | | | | | | | | 3-8 |
| Isomalt | | 5-10 | | | 5-30 | | | 3-8 |
| Soft Candy from Example 400 | 20-80 | | | | | | | |
| Soft Candy from Example 410 | | 10-20 | | | | | | |
| Soft Candy from Example 420 | | | 25-50 | | | | | |
| Soft Candy from Example 430 | | | | 10-70 | | | | |
| Soft Candy from Example 440 | | | | | 30-90 | | | |
| Soft Candy from Example 450 | | | | | | 30-90 | | |
| Soft Candy from Example 460 | | | | | | | 30-90 | |
| Soft Candy from Example 470 | | | | | | | | 20-80 |

| **Elastomeric Component:** | | | | | | | | |
|---|---|---|---|---|---|---|---|---|
| Gum Base from Example 10 | | | 30-50 | | | | | |
| Gum Base from Example 20 | | 50-10 | | | | 50-10 | | |
| Gum Base from Example 30 | | | | | | | | 30-70 |
| Gum Base from Example 40 | | | | | 30-70 | | | |
| Gum Base from Example 50 | 15-70 | | | | | | | |
| | | | | | | | | |
| Chewing Gum from Example 100 | 5-8 | | | | | | | |
| Chewing Gum from Example 110 | | | | | | | 25-75 | |
| Chewing Gum from Example 120 | | | | 30-90 | | | | |
| Chewing Gum from Example 130 | | | | | | 10-70 | | |
| Chewing Gum from Example 140 | | 15-70 | | | | | | |
| | | | | | | | | |
| Totals: | 100 | 100 | 100 | 100 | 100 | 100 | 100 | 100 |

### Candy Gum Making Processing:

Heat gum base (if any) until molten
Mix Soft Candy with Gum base (if any) with active at 70°-110 C
   1. Co-mixing
      a. Mixing soft candy composition with Gum base and/or chewing gum at 70°-110
      b. Temper on belt or table
      c. Pull /knead; or
   2. Center-filling
      a. Co-extrude soft candy composition with gum base and/or chewing gum such that the solid candy composition forms an interior region; or
      b. Co-extrude solid candy composition with gum base and/or chewing gum such that the gum base and/or chewing gum forms an interior region
Fold in Chewing Gum (if any)
Temper on belt or table
Pull /knead
Form by chain die, rotary die, drop roller, or cut and wrap

The next set of examples is directed to embodiments where multi-region chewing gum compositions include a coating layer.

### Coated Examples

Coating can involve treating the exterior surface of a confectionery composition. Various methods can be used to treat the exterior surface and apply a coating composition. These methods can include panning, extrusion, enrobing, and tumble coating, fold coating, dusting, sanding, as well as applying a coating composition around a confectionery composition as it proceeds through a rope sizer or batch former.

### Example 1010 - Multi-region Chewing Gum with Hard Coating

| **Multi-region Chewing Gum composition with Cooling Agents in the Coating** | |
|---|---|
| | |

| **Ingredient** | **Weight percent** |
|---|---|
| | |
| Multi-region Chewing Gum from Example 500 where solid candy region is located in the center and is surrounded by a chewing gum region | 67.00 |
| Isomalt | 32.50 |
| Cooling agents | 0.50 |
| | |
| **Total** | **100.00-** |

Procedure: Multi-region Chewing Gum is prepared as in Example 500 and individual pieces are formed into a desired shape such as a pillow or ball shape. The individual pieces are then loaded into a coating pan and the isomalt coating is applied by repeatedly spraying a solution of isomalt onto the candy gum pieces with tumbling and drying air circulation. The cooling agents are added to one or more of the applications of isomalt syrup for incorporation into the coating layer. The coated candy gum pieces are removed from the coating pan once the desired amount of coating has been achieve.

## Claims

1. A chewing gum composition comprising: (a) a first region comprising a solid candy composition comprising at least one active; and (b) a second region comprising an elastomer, wherein said first region comprises a chewy solid selected from a taffy, a nougat, a frappe, a fudge, a boiled candy, an isomalt-based candy, a solid suspension, and combination thereof.

2. The composition of claim 1 wherein said first region comprises one or more material selected from sweeteners, flavouring agents, sugar, high fructose corn syrup, aspartame, acesulfame potassium, gelatine, natural oils and fat.

3. The composition of claim 2 wherein said fat is present in an amount of from 1-15% by weight of the first region.

4. The composition of claim 1 wherein said first region comprises two or more compositions selected from a chewy solid, a boiled candy, and an isomalt-based candy.

5. The composition of any preceding claim wherein said solid suspension comprises particulates dispersed within said chewy solid.

6. The composition of claim 5 wherein said particulates are encapsulated.

7. The composition of claim 5 or claim 6 wherein said particulates are flavored particles.

8. The composition of any of claims 5-7 wherein said particulates comprise a sweetening material.

9. The composition of any preceding claim wherein said at least one active comprises caffeine.

10. The composition of any preceding claim wherein said chewing gum composition is in a form selected from a partially filled form, a completely filled form a pellet form, a stick form, a ball form, a square form, a rectangle form, a trapezoid form, a slab form, a shred form, a rope form, a layered form, and a tape form.

11. The composition of any preceding claim wherein said chewing gum composition comprises a third region.

12. A method of manufacturing a multi-region chewing gum composition, comprising the steps of (a) providing a first region comprising a solid candy composition comprising an active; (b) providing a second region comprising an elastomer; and (c) forming said first region composition and said second region composition so that said multi-region chewing gum composition is in a form selected from a partially filled form, a completely filled form, a pellet form, a stick form, a ball form, a square form, a rectangle form, a trapezoid form, a slab form, a shred form, a rope form, a layered form, and a tape form, and wherein said first region comprises a chewy solid selected from a taffy, a nougat, a frappe, a fudge, a boiled candy, an isomalt-based candy, a solid suspension, and combinations thereof.

13. The method as in claim 12 wherein said forming step includes co-extruding said candy composition and elastomer so that said candy composition is at least partially surrounded by said elastomer.

14. The method as in claim 12 or claim 13 wherein said active includes caffeine.

15. A method of masking off-tastes in chewing gum comprising the steps of: (a) providing a solid candy composition comprising an active and a taste-masking effective amount of a fat; (b) providing an elastomer; and (c) surrounding said solid candy composition with said elastomer so that said solid candy composition is at least partially surrounded by said elastomer.

16. The method of claim 15 wherein said fat is present in an amount of from 1-15% by weight of the solid candy composition.

## Patentansprüche

1. Kaugummizusammensetzung umfassend: (a) einen ersten Bereich, der eine feste Bonbonzusammensetzung umfasst, die mindestens einen Wirkstoff umfasst, und (b) einen zweiten Bereich, der ein Elastomer umfasst, wobei der erste Bereich einen kaubaren Feststoff umfasst, der aus einem Toffee, einem Nougat, einer Aufschlagmasse, einer Fudge, einem gekochten Bonbon, einem Bonbon auf Isomaltbasis, einer festen Suspension und Kombinationen derselben ausgewählt ist.

2. Zusammensetzung nach Anspruch 1, wobei der erste Bereich ein oder mehr Material(ien) umfasst, das/die aus Süßungsmitteln, Aromastoffen, Zucker, Maissirup mit hohem Fruktosegehalt, Aspartam, Acesulfam-Kalium, Gelatine, natürlichen Ölen und Fetten ausgewählt ist/sind.

3. Zusammensetzung nach Anspruch 2, wobei das Fett in einer Menge von 1 bis 15 Gewichtsprozent des ersten Bereichs vorhanden ist.

4. Zusammensetzung nach Anspruch 1, wobei der erste Bereich zwei oder mehr Zusammensetzungen umfasst, die aus einem kaubaren Feststoff, einem gekochten Bonbon und einem Bonbon auf Isomaltbasis ausgewählt sind.

5. Zusammensetzung nach einem der vorherigen Ansprüche, wobei die feste Suspension Teilchen umfasst, die in dem kaubaren Feststoff dispergiert sind.

6. Zusammensetzung nach Anspruch 5, wobei die Teilchen verkapselt sind.

7. Zusammensetzung nach Anspruch 5 oder Anspruch 6, wobei es sich bei den Teilchen um aromatisierte Teilchen handelt.

8. Zusammensetzung nach einem der Ansprüche 5 bis 7, wobei die Teilchen einen Süßungsstoff umfassen:

9. Zusammensetzung nach einem der vorherigen Ansprüche, wobei es sich bei dem mindestens einen Wirkstoff um Koffein handelt.

10. Zusammensetzung nach einem der vorherigen Ansprüche, wobei die Kaugummizusammensetzung sich in einer Form befindet, die aus einer teilweise gefüllten Form, einer vollständig gefüllten Form, einer Pelletform, einer Stabform, einer Kugelform, einer quadratischen Form, einer rechtwinkligen Form, einer trapezoidalen Form, einer Plattenform, einer geraspelten Form, einer Seilform, einer geschichteten Form und einer Bandform ausgewählt ist.

11. Zusammensetzung nach einem der vorherigen Ansprüche, wobei die Kaugummizusammensetzung einen dritten Bereich umfasst.

12. Verfahren zur Herstellung einer Kaugummizusammensetzung mit mehreren Bereichen, umfassend die Schritte (a) Bereitstellen eines ersten Bereichs, der eine feste Bonbonzusammensetzung umfasst, die einen Wirkstoff umfasst, (b) Bereitstellen eines zweiten Bereichs, der ein Elastomer umfasst, und (c) Formen der Zusammensetzung des ersten Bereichs und der Zusammensetzung des zweiten Bereichs, so dass die Kaugummizusammensetzung mit mehreren Bereichen sich in einer Form befindet, die aus einer teilweise gefüllten Form, einer vollständig gefüllten Form, einer Pelletform, einer Stabform, einer Kugelform, einer quadratischen Form, einer rechtwinkligen Form, einer trapezoidalen Form, einer Plattenform, einer geraspelten Form, einer Seilform, einer geschichteten Form und einer Bandform ausgewählt ist, und wobei der erste Bereich einen kaubaren Feststoff umfasst, der aus einem Toffee, einem Nougat, einer Aufschlagmasse, einer Fudge, einem gekochten Bonbon, einem Bonbon auf Isomaltbasis, einer festen Suspension und Kombinationen derselben ausgewählt ist.

13. Verfahren nach Anspruch 12, wobei der Formungsschritt eine Co-Extrusion der Bonbonzusammensetzung und des Elastomers beinhaltet, so dass die Bonbonzusammensetzung zumindest teilweise von dem Elastomer umhüllt ist.

14. Verfahren nach Anspruch 12 oder Anspruch 13, wobei es sich bei dem Wirkstoff um Koffein handelt.

15. Verfahren zur Maskierung von Nebengeschmäcken in Kaugummi, umfassend die Schritte: (a) Bereitstellen einer festen Bonbonzusammensetzung, die einen Wirkstoff und eine Menge Fett umfasst, die einen Geschmack wirksam maskieren kann, (b) Bereitstellen eines Elastomers, und (c) Umhüllen der festen Bonbonzusammensetzung mit dem Elastomer, so dass die feste Bonbonzusammensetzung zumindest teilweise von dem Elastomer umhüllt ist.

16. Verfahren nach Anspruch 15, wobei das Fett in einer Menge von 1 bis 15 Gewichtsprozent in der festen Bonbonzusammensetzung vorhanden ist.

## Revendications

1. Composition de chewing-gum comprenant : (a) une première région comprenant une composition de bonbon solide comprenant au moins un composant actif ; et (b) une deuxième région comprenant un élastomère, dans laquelle ladite première région comprend un solide à mâcher choisi parmi une tire, un nougat, un frappé, un caramel, un bonbon dur, un bonbon à base d'isomalt, une suspension solide et leurs combinaisons.

2. Composition selon la revendication 1, dans laquelle ladite première région comprend un ou plusieurs matériaux choisis parmi les édulcorants, les agents aromatisants, le sucre, le sirop de maïs à teneur élevée en fructose, l'aspartame, l'acésulfame potassium, la gélatine, les huiles et graisses naturelles.

3. Composition selon la revendication 2, dans laquelle ladite graisse est présente en une quantité de 1 à 15 % en poids de la première région

4. Composition selon la revendication 1, dans laquelle ladite première région comprend deux compositions ou plus choisies parmi un solide à mâcher, un bonbon dur et un bonbon à base d'isomalt.

5. Composition selon l'une quelconque des revendications précédentes, dans laquelle ladite suspension solide comprend des particules dispersées dans ledit solide à mâcher.

6. Composition selon la revendication 5, dans laquelle lesdites particules sont encapsulées.

7. Composition selon la revendication 5 ou la revendication 6, dans laquelle lesdites particules sont des particules aromatisées.

8. Composition selon l'une quelconque des revendications 5 à 7, dans laquelle lesdites particules comprennent un matériau édulcorant.

9. Composition selon l'une quelconque des revendications précédentes, dans laquelle ledit au moins un composant actif comprend de la caféine.

10. Composition selon l'une quelconque des revendications précédentes, dans laquelle ladite composition de chewing-gum se présente sous une forme choisie parmi une forme partiellement remplie, une forme complètement remplie, une forme de pastille, une forme de bâtonnet, une forme de boule, une forme carrée, une forme rectangulaire, une forme trapézoïdale, une forme de carreau, une forme morcelée, une forme de corde, une forme stratifiée et une forme de ruban.

11. Composition selon l'une quelconque des revendications précédentes, dans laquelle ladite composition de chewing-gum comprend une troisième région.

12. Procédé de production d'une composition de chewing-gum à régions multiples, comprenant les étapes de (a) fourniture d'une première région comprenant une composition de bonbon solide comprenant un composant actif ; (b) fourniture d'une deuxième région comprenant un élastomère ; et (c) formation de ladite composition de première région et ladite composition de deuxième région de sorte que ladite composition de chewing-gum à régions multiples se présente sous une forme choisie parmi une forme partiellement remplie, une forme complètement remplie, une forme de pastille, une forme de bâtonnet, une forme de boule, une forme carrée, une forme rectangulaire, une forme trapézoïdale, une forme de carreau, une forme morcelée, une forme de corde, une forme stratifiée et une forme de ruban et dans lequel ladite première région comprend un solide à mâcher choisi parmi un caramel mou, un nougat, un frappé, un caramel, un bonbon dur, un bonbon à base d'isomalt, une suspension solide et leurs combinaisons.

13. Procédé selon la revendication 12, dans lequel ladite étape de formation comprend la co-extrusion de ladite composition de bonbon et d'élastomère de sorte que ladite composition de bonbon soit au moins partiellement entourée dudit élastomère.

14. Procédé selon la revendication 12 ou la revendication 13, dans lequel ledit composant actif comprend la caféine.

15. Procédé de masquage des goûts indésirables dans le chewing-gum, comprenant les étapes de : (a) fourniture d'une composition de bonbon solide comprenant un composant actif et une quantité efficace masquant le goût d'une graisse ; (b) fourniture d'un élastomère ; et (c) entourage de ladite composition de bonbon solide avec ledit élastomère de sorte que ladite composition de bonbon solide soit au moins partiellement entourée par ledit élastomère.

16. Procédé selon la revendication 15, dans lequel ladite graisse est présente en une quantité de 1 à 15 % en poids de la composition de bonbon solide.
